# EUROPEAN PATENT SPECIFICATION

(11) **EP 2 832 804 B1**
(45) Date of publication and mention of the grant of the patent: **27.02.2019**
(21) Application number: 13768793.5
(22) Date of filing: 28.02.2013
(51) Int. Cl.: C09D 11/00, B41J 2/01, B41M 5/00, C09D 11/38, C09D 11/322, C09D 11/101, B41M 7/00

(54) **ACTIVE RAY-CURABLE INKJET INK COMPOSITION, INKJET RECORDING METHOD, AND PRINTED MATTER**
AKTIVE STRAHLUNGSHÄRTBARE TINTENSTRAHLTINTENZUSAMMENSETZUNG, TINTENSTRAHLAUFZEICHNUNGSVERFAHREN UND GEDRUCKTES MATERIAL
COMPOSITION D'ENCRE POUR JET D'ENCRE DURCISSABLE SOUS L'ACTION D'UN RAYONNEMENT ACTIF, PROCÉDÉ D'ENREGISTREMENT PAR JET D'ENCRE ET MATIÈRE IMPRIMÉE

(30) Priority: 30.03.2012 JP 2012080645
(43) Date of publication of application: 04.02.2015
(73) Proprietor: FUJIFILM Corporation, Tokyo 106-8620 (JP)
(72) Inventor: HAYATA Yuuichi, Ashigarakami-gun Kanagawa 258-8577 (JP)
(74) Representative: Klunker IP Patentanwälte PartG mbB
(86) International application number: PCT/JP2013/055341
(87) International publication number: WO 2013/146061

(56) References cited:
- EP-A1- 2 053 103
- EP-A1- 2 412 765
- EP-A1- 2 604 663
- EP-A1- 2 671 722
- EP-A1- 2 767 407
- EP-A1- 2 770 030
- EP-A1- 2 832 553
- WO-A1-2009/060235
- JP-A- 2002 241 647
- JP-A- 2005 505 615
- JP-A- 2006 152 278
- JP-A- 2007 231 082
- JP-A- 2009 173 712
- JP-A- 2011 057 791

## Description

### BACKGROUND OF THE INVENTION

### 1. Field of the Invention

The present invention relates to an active ray curable ink-jet ink composition, an ink-jet recording method, and a printed matter.

### 2. Description of the Related Art

As an image recording method of forming an image on a recording medium such as paper or the like, an electrophotographic system, a sublimation or melt type thermal transfer system, or an ink-jet method can be exemplified based on an image data signal.

In regard to the ink-jet method, since a printing apparatus is inexpensive, a plate is not necessary at the time of printing, and an ink composition is ejected only to an imaging unit required to form an image directly on the recording medium, the ink composition can be effectively used and operating costs are low in a case of small lot production in particular. Further, the ink-jet method has been attracting attention since noise is reduced and the system is excellent as an image recording system.

Further, the ink-jet recording system is an excellent system from the viewpoint that an ink composition for ink-jet recording (ink composition for radiation curable ink-jet recording) which can be cured by irradiation of radiation such as ultraviolet rays has excellent drying properties compared to those of a solvent-based ink composition since most parts of a component of the ink composition are cured due to the irradiation of radiation such as ultraviolet rays, and bleeding of an image hardly occurs such that the composition can be printed on various recording media.

As ink compositions for ink-jet recording in the related art, compositions disclosed in JP2011-502188A, JP2011-500932A, and US2010/330296A are exemplified.

EP 2 053 103 A1 discloses a radiation curable ink comprising a bifunctional (meth)acrylate compound, a thioxanthone or benzophenone based polymerization initiator, and optionally further polymerization initiators such as α-aminoketone compounds and bis(acyl)phosphine compounds.

### SUMMARY OF THE INVENTION

An object of the invention is to provide an active ray curable ink-jet ink composition which has a small elution amount (migration) of components in a film to the outside, excellent curability, and excellent blocking resistance, and in which a printed matter does not easily contract (shrink) and odor of the printed matter is suppressed, an ink-jet recording method using the ink-jet ink composition, and a printed matter.

The above-described problem of the present invention is solved by the active ray curable ink-jet ink composition, the ink-jet recording method, and the printed matter described in the following <1>, <12>, and <13>. The description will be made together with <2> to <11> which are preferred embodiments.
<1> An active ray curable ink-jet ink composition containing (component A) a polyfunctional (meth)acrylate compound; (component B) a polymerization initiator containing, (component B-1) a bis(acyl)phosphine compound having a molecular weight of 340 or more and/or an α-aminoketone compound having a molecular weight of 340 or more; and (component B-2) a compound represented by the following formula (1) or (2), wherein the content of the component A is 20% by mass to 98% by mass of the entire ink composition, a polymerization initiator having a molecular weight of less than 340 is not contained or the content of the polymerization initiator having a molecular weight of less than 340 is 1% by mass or less based on the entire ink composition, and
   the total content of the (component B) polymerization initiator together with other polymerization initiators is in the range of 2.0% by mass to 10.0 % by mass of the entire ink composition, 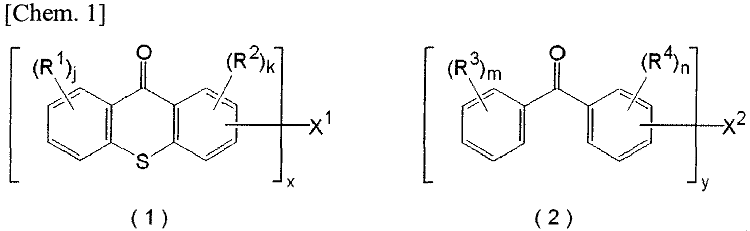 (in the formulae (1) and (2), R¹, R², R³, and R⁴ each independently represent an alkyl group having 1 to 5 carbon atoms or a halogen atom, x and y each independently represent an integer of 2 to 4, j and m each independently represent an integer of 0 to 4, k and n each independently represent an integer of 0 to 3, plural R¹'s, R²'s, R³'s, and R⁴'s may be the same as or different from each other when j, k, m, and n are integers of 2 or more, X¹ represents an x-valent hydrocarbon chain having 2 to 300 carbon atoms, which may include an ether bond and/or an ester bond, and X² represents a y-valent hydrocarbon chain having 2 to 300 carbon atoms, which may include an ether bond and/or an ester bond).
<2> The active ray curable ink-jet ink composition according to <1> , in which the compound represented by the formula (1) is a compound represented by the formula (1') and the compound represented by the formula (2) is a compound represented by the formula (2'), 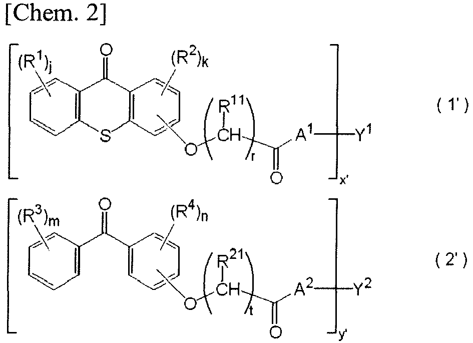 (in the formula (1'), R¹, R², j, and k have the same definitions as R¹, R², j, and k in the formula (1), R¹¹ each independently represent a hydrogen atom or an alkyl group having 1 to 4 carbon atoms, r each independently represent an integer of 1 to 6, x' represents an integer of 2 to 4, Y¹ represents a residue obtained by removing hydrogen atoms of the x' number of hydroxy groups from a polyhydroxy compound having the x' number of hydroxy groups, and A¹ represents at least one group selected from a group consisting of the following (i) to (iii), in the formula (2'), R³, R⁴, m, and n have the same definitions as R³, R⁴, m, and n in the formula (2), R²¹ each independently represent a hydrogen atom or an alkyl group having 1 to 4 carbon atoms, t represents an integer of 1 to 6, y' represents an integer of 2 to 4, Y² represents a residue obtained by removing hydrogen atoms of the y' number of hydroxy groups from a polyhydroxy compound having the y' number of hydroxy groups, and A² represents at least one group selected from a group consisting of the following (i) to (iii)),
   [Chem. 3]

   *-[O(CHR¹²CHR¹³)ₐ]_{d}-** (i)

   *-[O(CH₂)_{b}CO]_{d}-** (ii)

   *-[O(CH₂)_{b}CO]_{(d-1)}-[O(CHR¹²CHR¹³)ₐ]-** (iii)

   (in the formulae (i) to (iii), one of R¹² and R¹³ represents a hydrogen atom and the other represents a hydrogen atom, a methyl group, or an ethyl group, a represents an integer of 1 or 2, b represents an integer of 4 or 5, d represents an integer of 1 to 20, * represents a bonding position with carbonyl carbon, and ** represents a bonding position with Y¹ or Y²).
<3> The active ray curable ink-jet ink composition according to <1> or <2>, further containing the compound represented by the formula (1).
<4> The active ray curable ink-jet ink composition according to any one of <1> to <3>, further containing (component B-3) a compound represented by the following formula (3), 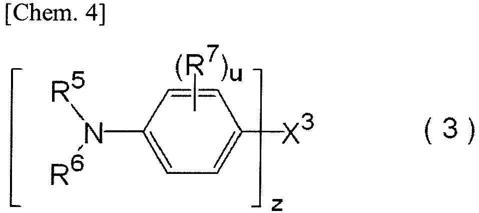 (in the formula (3), R⁵, R⁶, and R⁷ each independently represent a hydrogen atom or an alkyl group having 1 to 5 carbon atoms, z represents an integer of 2 to 4, u represents 4, and X³ represents a z-valent hydrocarbon chain having 2 to 300 carbon atoms, which may include an ether bond and/or an ester bond).
<5> The active ray curable ink-jet ink composition according to any one of <1> to <4>, further containing bis(2,4,6-trimethyl benzoyl)-phenyl phosphine oxide as the bis(acyl)phosphine compound having a molecular weight of 340 or more.
<6> The active ray curable ink-jet ink composition according to any one of <1> to <5>, further containing at least one selected from a group consisting of 2-benzyl-2-dimethylamino-1-(4-morpholinophenyl)-butanone-1,2-dimethylamino-2-(4-methyl benzyl)-1-(4-morpholin-4-yl-phenyl)-butane-1-one and polyethylene glycol di{β-4-[4-(2-dimethylamino-2-benzyl)butanoyl phenyl]piperazine} as an α-aminoketone compound having a molecular weight of 340 or more.
<7> The active ray curable ink-jet ink composition according to any one of <1> to <6>, further containing 20% by mass to 90% by mass of a bifunctional (meth)acrylate monomer based on the entire ink composition as the component A.
<8> The active ray curable ink-jet ink composition according to any one of <1> to <7>, further containing a bifunctional (meth)acrylate monomer which includes a hydrocarbon chain having 5 or more carbon atoms in a molecule and/or a bifunctional (meth)acrylate monomer which includes a propylene oxide chain or a tetraethylene glycol chain in a molecule as the component A.
<9> The active ray curable ink-jet ink composition according to any one of <1> to <8>, further containing 0.05% by mass to 5% by mass of the component B-1 based on the entire ink composition.
<10> The active ray curable ink-jet ink composition according to any one of <1> to <9>, further containing 0.1% by mass to 5% by mass of the component B-2 based on the entire ink composition.
<11> The active ray curable ink-jet ink composition according to any one of <1> to <10>, in which the active ray curable ink-jet ink composition is for package printing.
<12> An ink-jet recording method, including: (process a) ejecting the active ray curable ink-jet ink composition according to any one of <1> to <11> from an ink-jet head to print the active ray curable ink-jet ink composition on a support for a package having a thickness of 150 µm or less; and (process b) irradiating the ejected active ray curable ink-jet ink composition with active rays, in this order.
<13> A printed matter which is produced using the ink-jet recording method according to <12>.

According to the present invention, an active ray curable ink-jet ink composition which has a small elution amount (migration) of components in a film to the outside, excellent curability, and excellent blocking resistance, and in which a printed matter does not easily contract (shrink) and odor of the printed matter is suppressed, an ink-jet recording method using the ink-jet ink composition, and a printed matter can be provided.

### DESCRIPTION OF THE PREFERRED EMBODIMENTS

Hereinafter, the present invention will be described in detail.

### (Active ray curable ink-jet ink composition)

An active ray curable ink-jet ink composition of the present invention (hereinafter, also referred to as an "ink-jet ink composition" or an "ink composition") contains (component A) a polyfunctional (meth)acrylate compound; (component B) a polymerization initiator containing, (component B-1) a bis(acyl)phosphine compound having a molecular weight of 340 or more and/or an α-aminoketone compound having a molecular weight of 340 or more; and (component B-2) a compound represented by the following formula (1) or (2), wherein the content of the component A is 20% by mass to 98% by mass of the entire ink composition, a polymerization initiator having a molecular weight of less than 340 is not contained or the content of the polymerization initiator having a molecular weight of less than 340 is less than or equal to 1% by mass based on the entire ink composition, and
the total content of the (component B) polymerization initiator together with other polymerization initiators is in the range of 2.0% by mass to 10.0 % by mass of the entire ink composition, 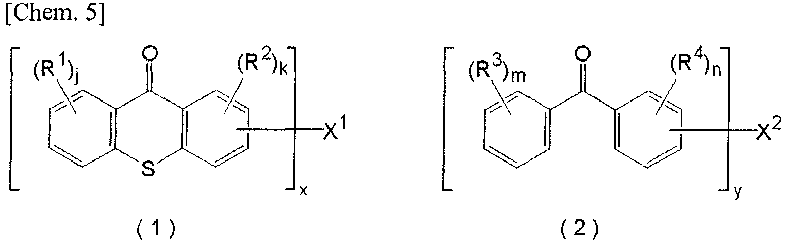 (in the formulae (1) and (2), R¹, R², R³, and R⁴ each independently represent an alkyl group having 1 to 5 carbon atoms or a halogen atom, x and y each independently represent an integer of 2 to 4, j and m each independently represent an integer of 0 to 4, k and n each independently represent an integer of 0 to 3, plural R¹'s, R²'s, R³'s, and R⁴'s may be the same as or different from each other when j, k, m, and n are integers of 2 or more, X¹ represents an x-valent hydrocarbon chain having 2 to 300 carbon atoms, which may include an ether bond and/or an ester bond, and X² represents a y-valent hydrocarbon chain having 2 to 300 carbon atoms, which may contain an ether bond and/or an ester bond).

In addition, in the specification, description of "A to B" representing a numerical range has the same definition of "equal to or more than A and equal to or less than B." Further, the "(component A) polyfunctional acrylate compound" or the like is also referred to as the "component A." Further, "% by mass" and "parts by mass" have the same definitions as "% by weight" and "parts by weight" respectively.

The ink composition of the present invention is an oil-based ink composition which can be cured by active rays. The "active rays" are radiation that can impart energy allowing initiating species to be generated in the ink composition by irradiation and include α-rays, γ-rays, X-rays, ultraviolet rays, visible rays, and electron beams. Among these, from the viewpoint of curing sensitivity and easy availability of devices, ultraviolet rays and electron beams are preferable and ultraviolet rays are more preferable.

A printed matter obtained by active ray curable ink-jet printing in the related art has a problem in that unreacted monomers, a polymerization initiator, a polymerization initiator residue, and the like are moved from a cured film and, particularly, an amount to be transferred to a package encapsulated material, that is, a so-called migration (elution, transition) amount is large in a case of being used for package printing such as food packaging. Further, there is a problem in that an odor of the cured film is strong and the odor moves to the encapsulated material or surrounding food.

In addition, in the active ray curable ink-jet printing, there is a problem in that a part of the printed matter easily contracts (shrink) at the time of curing, and, particularly, the problem of shrinkage is significant in a case of printing on a recording medium (support) which is relatively thin (for example, 10 µm to 50 µm) and is used for food packaging.

Moreover, high curing sensitivity appropriate for high productivity which is required for the package printing has been demanded.

The ink-jet recording ink composition of the present invention can provide an active ray curable ink-jet ink composition which has a small elution amount (migration) of components in a film to the outside, excellent curability, and excellent blocking resistance, and in which a printed matter does not easily contract (shrink) and odor of the printed matter is suppressed by adopting the above-described configuration.

The detailed mechanism is unclear, but the present inventors assume that a cross-linked structure is formed in a cured film by containing the component A so that the migration is suppressed. Further, the components B-1 and B-2 are polymerization initiators having large molecular weight, and it is considered that the polymerization initiators are difficult to move into a film and do not easily become volatile. Further, as a result of excellent curability being obtained using polymerization initiators together by a specific combination of the components B-1 and B-2, the molecular weight of polymers in the cured film to be generated becomes large and the cross-linked ratio of monomers of the component A becomes high so that degradation products of the components B-1 and B-2 remaining in the film and residues such as monomers are not easily eluted to the outside of the film. As a result, the present inventors assume that migration, odor, and blocking from the cured film are suppressed. Further, the present inventors found that components become highly sensitive using polymerization initiators together by a specific combination of the components B-1 and B-2.

Hereinafter, the ink composition of the present invention will be described in detail.

### (Component A) polyfunctional (meth)acrylate compound

The ink composition of the present invention contains a (component A) polyfunctional (meth)acrylate compound. By containing the component A, a cross-linked structure is formed in the cured film and the migration is suppressed.

Moreover, in the present invention, it is mentioned as "(meth)acrylate" when both or either of "acrylate" and "methacrylate" is indicated, and it is mentioned as "(meth)acryl" when both or either of "acryl" and "methacryl" is indicated.

As the component A, a (component A-1) polyfunctional (meth)acrylate monomer and a (component A-2) polyfunctional (meth)acrylate oligomer are exemplified. That is, it is preferable that the (component A) polyfunctional (meth)acrylate compound be a (component A-1) polyfunctional (meth)acrylate and/or a (component A-2) polyfunctional (meth)acrylate oligomer.

These may be used alone or in combination of two or more kinds thereof. Further, the component A-1 may be used in two or more kinds thereof, the components A-1 and A-2 may be used separately, or the component A-1 and/or the component A-2 may be used in two or more kinds thereof, which is not particularly limited.

In addition, it is preferable that the component A be a polyfunctional acrylate compound.

The content of the component A is 20% by mass to 98% by mass of the entire ink composition. From the viewpoint of migration, suppression of odor, and reactivity, in a case where the component A is configured of the components A-1 and A-2, the total content of the component A combining the components A-1 and A-2 is in the range of 20% by mass to 98% by mass, preferably in the range of 30% by mass to 97% by mass, particularly preferably in the range of 40% by mass to 96% by mass, and most preferably in the range of 50% by mass to 95% by mass of the entire ink composition.

### (Component A-1) polyfunctional (meth)acrylate monomer

In the present invention, the polyfunctional (meth)acrylate monomer means a compound containing two or more (meth)acryloyloxy groups in a molecule and having a molecular weight of 1000 or less.

In the present invention, the molecular weight of the polyfunctional (meth)acrylate monomer is preferably 700 or less, more preferably 500 or less, still more preferably in the range of 226 to 358, and particularly preferably in the range of 242 to 300. When the molecular weight is within the above-described range, suppression of the migration and odor of the printed matter and the reactivity can both be achieved.

The polyfunctional (meth)acrylate monomer is preferably bifunctional to hexafunctional, more preferably bifunctional to tetrafunctional, still more preferably bifunctional or trifunctional, and particularly preferably bifunctional.

As the polyfunctional (meth)acrylate monomer, from the viewpoint of the reactivity and odor, a bifunctional or higher (meth)acrylate monomer having a hydrocarbon chain having 5 or more carbon atoms in a molecule or a bifunctional or higher (meth)acrylate monomer having a propylene oxide chain or a tetraethylene glycol chain in a molecule is preferable, a bifunctional (meth)acrylate monomer having a hydrocarbon chain having 5 or more carbon atoms in a molecule or a bifunctional (meth)acrylate monomer having a propylene oxide chain or a tetraethylene glycol chain in a molecule is more preferable, and a bifunctional (meth)acrylate monomer having a hydrocarbon chain having 5 or more carbon atoms in a molecule is still more preferable.

Specific preferred examples thereof include dipropylene glycol di(meth)acrylate, tripropylene glycol di(meth)acrylate, tetraethylene glycol di(meth)acrylate, neopentyl glycol di(meth)acrylate, propylene oxide (PO)-modified neopentyl glycol di(meth)acrylate, 3-methylpentanediol di(meth)acrylate, hexanediol di(meth)acrylate, ethylene oxide (EO)-modified hexanediol di(meth)acrylate, PO-modified hexane diol di(meth)acrylate, heptanediol di(meth)acrylate, octanediol di(meth)acrylate, nonane diol di(meth)acrylate, decanediol di(meth)acrylate, and dodecanediol di(meth)acrylate.

Among these, tripropylene glycol diacrylate, neopentyl glycol diacrylate, PO-modified neopentyl glycol diacrylate, 3-methyl-1,5-pentanediol diacrylate, nonanediol diacrylate, decanediol diacrylate, and dodecanediol diacrylate are more preferable.

Further, examples of the trifunctional or higher (meth)acrylate compound include pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, tetramethylolmethane tetra(meth)acrylate, and oligo ester (meth)acrylate.

The hydrocarbon chain having 5 or more carbon atoms may be linear or branched.

Moreover, as the hydrocarbon chain having 5 or more carbon atoms, a hydrocarbon chain having 5 to 12 carbon atoms is preferable, a linear or branched alkylene group having 5 to 12 carbon atoms is more preferable, and a linear or branched alkylene group having 5 to 8 carbon atoms is still more preferable.

In the present invention, from the viewpoint of maintaining the low ink viscosity, it is preferable that the polyfunctional (meth)acrylate monomer have a linear or branched alkylene group and be a monomer having no cyclic structures.

From the viewpoint of maintaining the low ink viscosity, the polyfunctional (meth)acrylate monomer preferably has a viscosity of 3 mPa·s to 20 mPa·s at 25°C in a unit of a monomer and more preferably a viscosity of 6 mPa·s to 15 mPa·s. Further, it is more preferable that the viscosity of the bifunctional (meth)acrylate monomer at 25°C be within the above-described range and particularly preferable that the viscosity of the bifunctional acrylate monomer at 25°C be within the above-described range.

In the present invention, as the polyfunctional (meth)acrylate monomer, from the viewpoint of forming the cross-linked structure in the cured film, suppressing migration, odor, blocking, and shrinkage of a printed matter, and maintaining the viscosity of the ink composition to be low viscosity appropriate for ink-jet, the bifunctional (meth)acrylate monomer is preferably used.

The content of the bifunctional (meth)acrylate monomer is preferably in the range of 20% by mass to 90% by mass, more preferably in the range of 40% by mass to 90% by mass, still more preferably in the range of 50% by mass to 90% by mass, and particularly preferably in the range of 80% by mass to 90% by mass based on the total mass of the ink composition.

In a case where the trifunctional or higher (meth)acrylate monomer is contained, from the viewpoint of suppressing shrinkage of a printed matter and maintaining the low ink viscosity, the content of the trifunctional or higher (meth)acrylate monomer is preferably 30% by mass or less, more preferably 20% by mass or less, and still more preferably 15% by mass or less based on the total mass of the ink composition.

Further, in a case where a monofunctional (meth)acrylate monomer described below is contained, from the viewpoint of suppressing migration, odor, and blocking, the content of the monofunctional (meth)acrylate monomer is preferably 50% by mass or less and more preferably 30% by mass or less based on the total mass of the ink composition.

### (Component A-2) polyfunctional (meth)acrylate oligomer

The ink composition of the present invention may contain a (component A-2) polyfunctional (meth)acrylate oligomer as the component A.

In general, an oligomer is a polymer to which a finite number (generally, 5 to 100) of monomers are bonded, and a known oligomer having two or more (meth)acryloyloxy groups can be arbitrarily selectable. In the present invention, the weight average molecular weight of the polyfunctional (meth)acrylate oligomer is 1000 or more, preferably 1000 to 5000, more preferably 1500 to 4500, and particularly preferably 2000 to 4000. When the weight average molecular weight is within the above-described range, the migration, odor, and blocking of the cured film can be suppressed and the viscosity of the ink can be adjusted to be within the viscosity range appropriate for the ink-jet.

Further, if the weight average molecular weight is 1000 or more, but the oligomer has molecular weight distribution, it is preferable that a component having a molecular weight of 1000 or less be 5% by mass or less based on the total mass of the entire polyfunctional (meth)acrylate oligomer from the viewpoint of suppressing migration.

The polyfunctional (meth)acrylate oligomer includes two or more (meth)acryloyloxy groups, is preferably bifunctional to hexafunctional, more preferably bifunctional to tetrafunctional, still more preferably bifunctional or trifunctional, and particularly preferably bifunctional. Further, it is preferable that the polyfunctional (meth)acrylate oligomer be a polyfunctional acrylate oligomer.

As the polyfunctional (meth)acrylate oligomer in the present invention, oligo ester (meth)acrylate is preferable, urethane (meth)acrylate, polyester (meth)acrylate, and epoxy (meth)acrylate are more preferable, and urethane (meth)acrylate is still more preferable.

Preferred examples of the urethane (meth)acrylate include aliphatic urethane (meth)acrylate and aromatic urethane (meth)acrylate, but aliphatic urethane (meth)acrylate is more preferable.

Further, urethane (meth)acrylate is preferably tetrafunctional or lower urethane (meth)acrylate, and more preferably bifunctional urethane (meth)acrylate.

By containing urethane (meth)acrylate, an ink composition with excellent adhesion to a substrate and curability can be obtained.

In regard to the component A-2, "*Oligomer Handbook*" (Furukawa Junji supervision, Chemical Daily Co., Ltd.) can be also referenced.

In addition, examples of commercially available products of polyfunctional (meth)acrylate oligomer are as follows.

Examples of urethane (meth)acrylate include R1204, R1211, R1213, R1217, R1218, R1301, R1302, R1303, R1304, R1306, R1308, R1901, and R1150 (manufactured by Dai-ichi Kogyo Seiyaku Co., Ltd.), EBECRYL SERIES (for example, EBECRYL230, 270, 4858, 8402, 8804, 8807, 8803, 9260, 1290, 1290K, 5129, 4842, 8210, 210, 4827, 6700, 4450, and 220, manufactured by Daicel-Cytec Co., Ltd.), NK OLIGO U-4HA, U-6HA, U-15HA, U-108A, and U200AX (manufactured by Shin-Nakamura Chemical Co., Ltd.), and ARONIX M-1100, M-1200, M-1210, M-1310, M-1600, and M-1960 (manufactured by Toagosei Co., Ltd.).

Examples of polyester (meth)acrylate include EBECRYL SERIES (for example, EBECRYL770, IRR467, 81, 84, 83, 80, 675, 800, 810, 812, 1657, 1810, IRR302, 450, 670, 830, 870, 1830, 1870, 2870, IRR267, 813, IRR483, and 811 manufactured by Daicel-Cytec Co., Ltd.), and ARONIX M6100, M-6200, M-6250, M-6500, M-7100, M-8030, M-8060, M-8100, M-8530, M-8560, and M-9050 (manufactured by Toagosei Co., Ltd.).

Further, Examples of epoxy (meth)acrylate include EBECRYL SERIES (for example, EBECRYL600, 860, 2958, 3411, 3600, 3605, 3700, 3701, 3703, 3702, 3708, RDX63182, and 6040 manufactured by Daicel-Cytec Co., Ltd.).

The polyfunctional (meth)acrylate oligomer may be used alone or in combination of two or more kinds thereof.

The content of the component A-2 in the ink composition of the present invention is preferably 15% by mass or less and more preferably 10% by mass or less based on the total mass of the ink composition.

In the present invention, other polymerizable compounds may be contained in addition to the components A (components A-1 and A-2).

Examples of other polymerizable compounds include unsaturated carboxylic acid such as N-vinyl lactams (preferably N-vinyl caprolactam), isobornyl acrylate, itaconic acid, crotonic acid, isocrotonic acid, and maleic acid, and salts thereof, anhydrides having an ethylenically unsaturated group, acrylonitrile, styrene, various unsaturated polyester, unsaturated polyether, unsaturated polyamide, unsaturated urethane, and radical polymerizable compounds such as a (meth)acrylamide compound and a vinylether compound. Among these, N-vinylcaprolactam or isobornyl acrylate is preferable and a combination of N-vinylcaprolactam and isobornyl acrylate is more preferable.

In addition, as other polymerizable compounds, specifically, commercially available products described in "Cross-linking Agent Handbook" (1981, edited by Shinzo Yamashita, published by Taiseisha, Ltd.), "UV·EB Curing Handbook (part of raw materials)" (1985, edited by Kiyoshi Kato, published by Kobunshi Kankokai), "Application and Market of UV·EB Curing Technology" (p. 79, 1989, edited by Rad Tech Japan, CMC Publishing Co., Ltd.), "Polyester Resin Handbook" (1988, written by Eiichiro Takiyama, published by Nikkan Kogyo Shimbun, Ltd.); and a radical polymerizable or cross-linked monomer, an oligomer, and a polymer which are known in the field can be used.

The molecular weights of other polymerizable compounds are preferably in the range of 80 to 2000, more preferably in the range of 80 to 1000, and still more preferably in the range of 80 to 800.

In a case where the ink composition of the present invention contains other polymerizable compounds, the content of other polymerizable compounds in the ink composition of the present invention is preferably 1% by mass to 40% by mass, more preferably 3% by mass to 30% by mass, and particularly preferably 5% by mass to 25% by mass based on the total mass of the ink composition.

### (Component B) polymerization initiator

As a (component B) polymerization initiator, the ink composition of the present invention contains (component B-1) a bis(acyl)phosphine compound having a molecular weight of 340 or more and/or an α-aminoketone compound having a molecular weight of 340 or more, and (component B-2) the compound represented by the following formula (1) or (2). In addition, a polymerization initiator having a molecular weight of less than 340 is not contained or the content of the polymerization initiator having a molecular weight of less than 340 is less than or equal to 1% by mass of the entire ink composition. 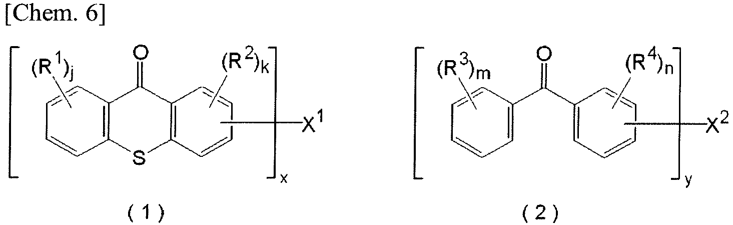 (in the formulae (1) and (2), R¹, R², R³, and R⁴ each independently represent an alkyl group having 1 to 5 carbon atoms or a halogen atom, x and y each independently represent an integer of 2 to 4, j and m each independently represent an integer of 0 to 4, k and n each independently represent an integer of 0 to 3, plural R¹'s, R²'s, R³'s, and R⁴'s may be the same as or different from each other when j, k, m, and n are integers of 2 or more, X¹ represents an x-valent hydrocarbon chain having 2 to 300 carbon atoms, which may include an ether bond and/or an ester bond, and X² represents a y-valent hydrocarbon chain having 2 to 300 carbon atoms, which may include an ether bond and/or an ester bond).

Moreover, the polymerization initiator in the present invention includes a compound (for example, a sensitizer) which absorbs specific active energy rays and accelerates decomposition of the polymerization initiator as well as a compound which absorbs external energy such as active radiation, and generates polymerization initiating species. Further, a compound (a so-called co-initiator) having a function of improving radical generation efficiency of the polymerization initiator is included.

### (Component B-1) bis(acyl)phosphine compound having a molecular weight of 340 or more and/or α-aminoketone compound having a molecular weight of 340 or more

The ink composition of the present invention contains (component B-1) a bis(acyl)phosphine compound having a molecular weight of 340 or more and/or an α-aminoketone compound having a molecular weight of 340 or more. By containing the component B-1, the curing sensitivity becomes excellent and the migration is suppressed.

The ink composition of the present invention may contain only any one of (component B-1-1) a bis(acyl)phosphine compound having a molecular weight of 340 or more and (component B-1-2) an α-aminoketone compound having a molecular weight of 340 or more, the component B-1-1 and the component B-1-2 may be used together, and at least the component B-1-1 is preferably contained, which is not limited thereto.

Further, the component B-1-1 or B-1-2 may be used alone or in combination of plural kinds thereof. In a case where a commercially available compound is used as the component B-1, catalog values of the compound may be used for the molecular weight of the component B-1.

### (Component B-1-1) A bis(acyl)phosphine compound having a molecular weight of 340 or more

A bis(acyl)phosphine oxide compound having a molecular weight of 340 or more is preferable as the component B-1-1. As the bis(acyl)phosphine oxide compound having a molecular weight of 340 or more, which is not particularly limited, a known compound can be used, but a compound having a molecular weight of 340 or more is preferable among the compounds represented by the following formula (b-1-1). 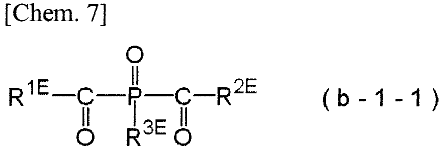 (in the formula (b-1-1), R^{1E}, R^{2E}, and R^{3E} each independently represent a halogen atom or an aromatic hydrocarbon group which may have a methyl group or an ethyl group as a substituent).

As the component B-1-1, a compound having a molecular weight of 340 or more can be used among known bis(acyl)phosphine oxide compounds. For example, bis(acyl)phosphine oxide compounds described in JP1991-101686A (JP-H03-101686A), JP1993-345790A (JP-H05-345790A), and JP1994-298818A (JP-H06-298818A) are exemplified.

Specific examples thereof include bis(2,6-dichlorobenzoyl)phenyl phosphine oxide, bis(2,6-dichlorobenzoyl)-2,5-dimethyl phenyl phosphine oxide, bis(2,6-dichlorobenzoyl)-4-ethoxy phenyl phosphine oxide, bis(2,6-dichlorobenzoyl)-4-propyl phenyl phosphine oxide, bis(2,6-dichlorobenzoyl)-2-naphthyl phosphine oxide, bis(2,6-dichlorobenzoly)-1-naphthyl phosphine oxide, bis(2,6-dichlorobenzoyl)-4-chlorophenyl phosphine oxide, bis(2,6-dichlorobenzoyl)-2,4-dimethoxy phenyl phosphine oxide, bis(2,6-dichlorobenzoyl)decyl phosphine oxide, bis(2,6-dichlorobenzoyl)-4-octyl phenyl phosphine oxide, bis(2,4,6-trimethylbenzoyl)phenyl phosphine oxide, bis(2,4,6-trimethylbenzoyl)-2,5-dimethyl phenyl phosphine oxide, bis(2,6-dichloro-3,4,5-trimethoxybenzoyl)-2,5-dimethyl phenyl phosphine oxide, bis(2,6-dichloro-3,4,5-trimethoxy benzoyl)-4-ethoxy phenyl phosphine oxide, bis(2-methyl-1-naphthoyl)-2,5-dimethyl phenyl phosphine oxide, bis(2-methyl-1-naphthoyl)-4-ethoxy phenyl phosphine oxide, bis(2-methyl-1-naphthoyl)-2-naphthyl phosphine oxide, bis(2-methyl-1-naphthoyl)-4-propyl phenyl phosphine oxide, bis(2-methyl-1-naphtholy)-2,5-dimehtyl phenyl phosphine oxide, bis(2-methoxy-1-naphthoyl)-4-ethoxy phenyl phosphine oxide, bis(2-chloro-1-naphtholy)-2,5-dimethyl phenyl phosphine oxide, and bis(2,6-dimethoxy benzoyl)-2,4,4-trimethyl pentyl phosphine oxide.

Among these, as the component B-1-1, bis(2,4,6-trimethylbenzoyl)phenyl phosphine oxide (IRGACURE 819, manufactured by BASF Japan Ltd.) and bis(2,6-dimethoxybenzoyl)-2,4,4-trimethyl pentyl phenyl phosphine oxide are preferable and bis(2,4,6-trimethylbenzoyl)phenyl phosphine oxide is particularly preferable.

### (Component B-1-2) An α-aminoketone compound having a molecular weight of 340 or more

The component B-1-2 is not particularly limited and known compounds can be used therefor, and a compound having a molecular weight of 340 or more among compounds represented by the following formula (b-1-2) is preferable.

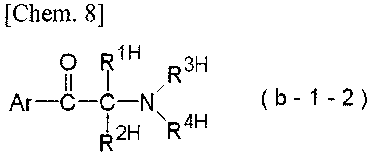

In the formula (b-1-2), Ar represents a phenyl group which is substituted with -SR^{5H} or -N(R^{7H})(R^{8H}), R^{5H} represents a hydrogen atom or an alkyl group, R^{1H} and R^{2H} each independently represent an alkyl group having 1 to 8 carbon atoms, and R^{3H} and R^{4H} each independently represent a hydrogen atom, an alkyl group having 1 to 12 carbon atoms, an alkyl group having 2 to 4 carbon atoms which is substituted with an alkoxy group having 1 to 4 carbon atoms, or an alkenyl group having 3 to 5 carbon atoms. R^{1H} and R^{2H} may be bonded to each other to form an alkylene group having 2 to 9 carbon atoms. R^{3H} and R^{4H} may be bonded to each other to form an alkylene group having 3 to 7 carbon atoms, and the alkylene group may include -O- or -N(R^{6H})- in an alkylene chain. R^{6H} represents an alkyl group having 1 to 4 carbon atoms. R^{7H} and R^{8H} each independently represent a hydrogen atom, an alkyl group having 1 to 12 carbon atoms, an alkyl group having 2 to 4 carbon atoms which is substituted with an alkoxy group having 1 to 4 carbon atoms, or an alkenyl group having 3 to 5 carbon atoms. R^{7H} and R^{8H} may be bonded to each other to form an alkylene group having 3 to 7 carbon atoms, and the alkylene group may include -O- or -N(R^{6H})- in an alkylene chain. Here, R^{6H} has the same definition as that described above.

Examples of the α-aminoketone compound having a molecular weight of 340 or more include 2-benzyl-2-dimethylamino-1-(4-morpholinophenyl)-butanone-1 (IRGACURE 369, manufactured by BASF Japan Ltd.) and 2-dimethylamino-2-(4-methylbenzyl)-1-(4-morpholine-4-yl-phenyl)-butane-1-one (IRGACURE 379)

Further, as the component B-1-2, a high molecular α-aminoketone compound is preferable, and specific examples thereof include polyethylene glycol di{β-4-[4-(2-dimethylamino-2-benzyl)butanoylphenyl]piperazine} (Omnipol 910, average molecular weight 1032, manufactured by Insight High Technology Co., Ltd.).

In the present invention, it is particularly preferable that the ink composition contain at least bis(2,4,6-trimethylbenzoyl)phenyl phosphine oxide as the component B-1.

From the viewpoint of curing sensitivity (curability) and suppressing the migration and odor, the content of the component B-1 is preferably in the range of 0.05% by mass to 5% by mass and more preferably in the range of 2% by mass to 4% by mass of the entire ink composition.

### (Component B-2) Compound represented by formula (1) or (2)

The ink composition of the present invention contains a (component B-2) compound represented by the formula (1) or (2) as the polymerization initiator. That is, the ink composition of the present invention contains a (component B-2-1) compound represented by the formula (1) and/or a (component B-2-2) compound represented by the formula (2).

In the present invention, an ink composition which has excellent curability and in which migration, odor, and blocking from the cured film are suppressed can be obtained by the ink composition containing the component B-2.

### (Component B-2-1) compound represented by formula (1)

It is preferable that the ink composition of the present invention contain a (component B-2-1) compound represented by the formula (1) as the component B-2. 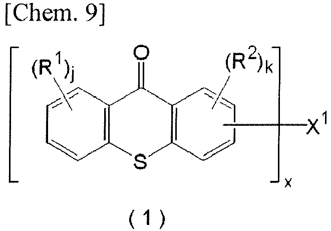 (in the formula (1), R¹ and R² each independently represent an alkyl group having 1 to 5 carbon atoms or a halogen atom, j represents an integer of 0 to 4, k represents an integer of 0 to 3, x represents an integer of 2 to 4, plural R¹'s and R²'s may be the same as or different from each other when j and k are integers of 2 or more, and X¹ represents an x-valent hydrocarbon chain having 2 to 300 carbon atoms, which may include an ether bond and/or an ester bond).

In the formula (1), R¹ and R² each independently represent an alkyl group having 1 to 5 carbon atoms or a halogen atom, the alkyl group having 1 to 5 carbon atoms may be linear, branched, or cyclic, but is preferably linear or branched and is preferably an alkyl group having 1 to 4 carbon atoms, more preferably an alkyl group having 2 or 3 carbon atoms, and still more preferably an ethyl group or an isopropyl group. As the halogen atom, a fluorine atom, a chlorine atom, a bromine atom, and an iodine atom are exemplified, among these, a chlorine atom is preferable. It is particularly preferable that R¹ and R² each independently represent an ethyl group, an isopropyl group, or a chlorine atom.

In the formula (1), j represents an integer of 0 to 4, is preferably 0 to 2, and more preferably 0 or 1. In a case where j is an integer of 2 or more, plural R¹'s may be the same as or different from each other.

In the formula (1), k represents an integer of 0 to 3, is preferably 0 to 2, more preferably 0 or 1, and still more preferably 0. In a case where k is an integer of 2 or more, plural R²'s may be the same as or different from each other.

In the formula (1), x represents an integer of 2 to 4, is more preferably 3 or 4, and still more preferably 4.

In the formula (1), X¹ represents an x-valent linking group formed of an x-valent hydrocarbon chain having 2 to 300 carbon atoms which may include an ether bond (-O-) and/or an ester bond (-(C=O)-O-).

Further, in the formula (1), plural (x number) thioxanthone structures (in the formula (1), the structure expressed in parentheses) from which X¹ as a linking group is removed are included, but the structures may be the same as or different from each other, and are not particularly limited. From a viewpoint of synthesis, it is preferable that the structures be the same as each other.

In the compound represented by the formula (1), a substitution position to thioxanthone is expressed as follows.

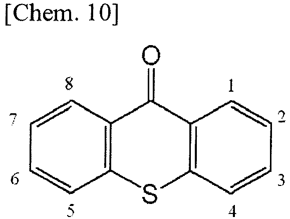

The substitution position of X¹ is 1- to 4-position, is preferably 2-, 3-, or 4-position, more preferably 2- or 4-position, and still more preferably 4-position.

The substitution position of R¹ is 5- to 8-position, is preferably 6- or 7-position, and more preferably 6-position.

Further, the substitution position of R² is 1- to 4-position, is preferably 1-, 2-, or 3-position, and more preferably 1 -position.

It is preferable that the compound represented by the formula (1) be the compound represented by the following formula (1').

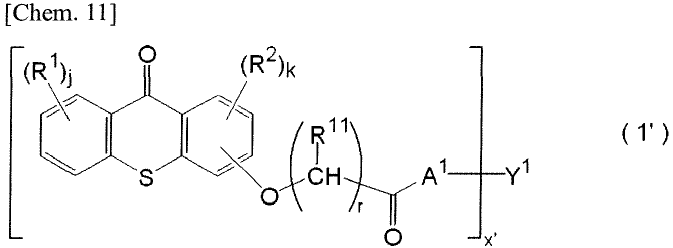

In the formula (1'), R¹, R², j, and k have the same definitions as R¹, R², j, and k in the formula (1), and the preferable ranges thereof are the same as those of the formula (1).

In the formula (1'), R¹¹ each independently represent a hydrogen atom or an alkyl group having 1 to 4 carbon atoms, is preferably a hydrogen atom, a methyl group, or an ethyl group, and more preferably a hydrogen atom.

In the formula (1'), r each independently represent an integer of 1 to 6, is preferably an integer of 1 to 3, more preferably an integer of 1 or 2, and still more preferably 1. In addition, when r is 2 or more, plural R¹¹'s may be the same as or different from each other.

x' represents an integer of 2 to 4, is preferably 2 or 3, and more preferably 2.

Y¹ represents a residue obtained by removing hydrogen atoms of the x' number of hydroxy groups from a polyhydroxy group having the x' number of hydroxy groups. Specifically, Y¹ is preferably a residue obtained by removing hydrogen atoms of the x' number of hydroxy groups from a polyhydroxy compound selected from a group consisting of ethylene glycol, propylene glycol, butylene glycol, glycerin, trimethylolpropane, ditrimethylolpropane, and pentaerythritol, and is a residue obtained by removing hydrogen atoms of the entire hydroxy groups.

In the formula (1'), A¹ represents a group selected from a group consisting of the following (i) to (iii).
[Chem. 12]

*-[O(CHR¹²CHR¹³)ₐ]_{d}-** (i)

*-[O(CH₂)_{b}CO]_{d}-** (ii)

*-[O(CH₂)_{b}CO]_{(d-1)}-[O(CHR¹²CHR¹³)ₐ]-** (iii)

In the formulae (i) to (iii), one of R¹² and R¹³ represents a hydrogen atom and the other represents a hydrogen atom, a methyl group, or an ethyl group, a represents an integer of 1 or 2, b represents an integer of 4 or 5, d represents an integer of 1 to 20, * represents a bonding position with carbonyl carbon, and ** represents a bonding position with Y¹.

A¹ is preferably a group represented by the formula (i) and more preferably *-(OCH₂CH₂)_{d}-**, *-(OCH₂CH₂CH₂CH₂)_{d}-**, or *-O(CH(CH₃)CH₂)_{d}-**. In this case, d is more preferably an integer of 3 to 10.

The molecular weight of the component B-2-1 is preferably 500 to 3000, is more preferably 800 to 2500, and still more preferably 1000 to 2000.

When the molecular weight is 500 or more, an ink composition in which elution of a compound from the cured film is suppressed and migration, odor, and blocking are suppressed can be obtained. On the other hand, when the molecular weight is 3000 or less, steric hindrance of molecules is small and the degree of freedom of molecules in a liquid/film is maintained so that high sensitivity can be obtained.

Further, in a case where the component B-2-1 is a mixture of plural compounds having different numbers of carbon atoms or the like, it is preferable that the weight average molecular weight be within the above-described range. The weight average molecular weight of the component B-2-1 can be calculated as the weight average molecular weight in terms of polystyrene to be measured by gel permeation chromatography (GPC). HLC-8220GPC (manufactured by Tosoh Corporation) is used as GPC, TSKgeL SuperAWM-H (manufactured by Tosoh Corporation) is used as a column, and N-methylpyrrolidone is used as an eluent.

A specific example of the component B-2-1 will be described below, but the present invention is not limited to the compounds described below.

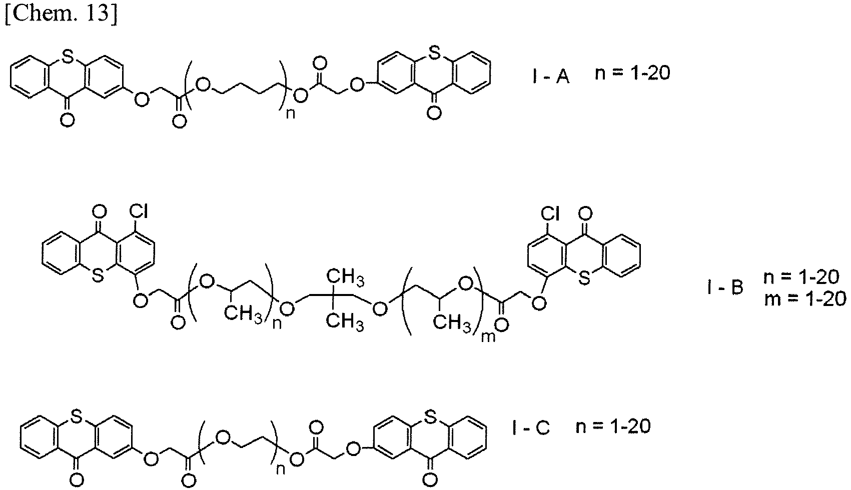

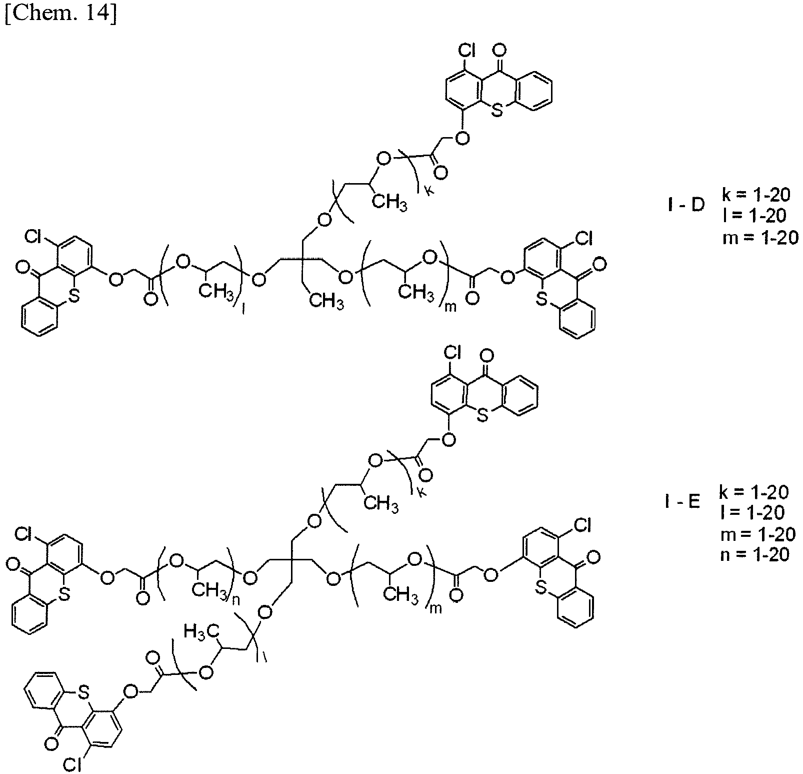

Among these, the compound (I-A) or (I-E) is preferable, and the compound (I-E) is more preferable.

As the compound represented by the formula (1), a compound which is commercially available can be used. Specific examples thereof include Speedcure 7010 (1,3-di({α-[1-chloro-9-oxo-9H-thioxanthen-4-yl]oxy}acetylpoly[oxy(1-methylethylene)])oxy) -2,2-bis({α-[1-chloro-9-oxo-9H-thioxanthen-4-yl]oxy}acetylpoly[oxy(1 -methyl ethylene)])oxy methyl)propane, CAS No. 1003567-83-6), and Omnipol TX (Polybutyleneglycolbis(9-oxo-9H-thioxanthenyloxy)acetate, CAS No. 813452-37-8).

The compound represented by the formula (1) can be produced by a known reaction, which is not particularly limited, but, for example, the compound represented by the formula (1') can be prepared by reacting the compound represented by the following formula (1-1) and the compound represented by the following formula (1-2).

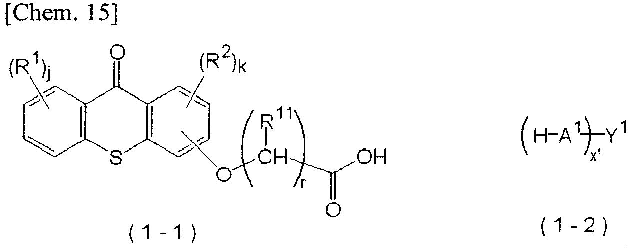

In the formulae (1-1) and (1-2), R¹, R², R¹¹, A¹, Y¹, j, k, r, and x' have the same definitions as those of the formula (1') and the preferred ranges thereof are the same as those of the formula (1').

It is preferable that the above-described reaction be carried out under the presence of a solvent, and examples of an appropriate solvent include aromatic hydrocarbon such as benzene, toluene, and xylene.

Further, it is preferable that the reaction be carried out under the presence of a catalyst, examples of the catalyst include sulfonic acid (for example, p-toluenesulfonic acid or methanesulfonic acid), inorganic acid (for example, sulfuric acid, hydrochloric acid, or phosphoric acid), and Lewis acid (aluminum chloride, boron trifluoride, or organotitanate).

The reaction temperature and the reaction time are not particularly limited.

After the reaction is completed, a product can be separated by isolating from a reaction mixture using known means, washing as needed, and drying.

### (Component B-2-2) compound represented by formula (2)

It is preferable that the ink composition of the present invention contain the (component B-2-2) compound represented by the formula (2) as the component B-2. 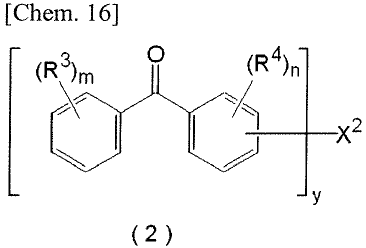 (in the formula (2), R³ and R⁴ each independently represent an alkyl group having 1 to 5 carbon atoms or a halogen atom, m represents an integer of 0 to 4, n represents an integer of 0 to 3, y represents an integer of 2 to 4, plural R³ and R⁴ may be the same as or different from each other when m and n are integers of 2 or more, X² represents a y-valent hydrocarbon chain having 2 to 300 carbon atoms, which may contain an ether bond and/or an ester bond).

In the formula (2), R³ and R⁴ each independently represent an alkyl group having 1 to 5 carbon atoms or a halogen atom, the alkyl group having 1 to 5 carbon atoms may be linear, branched, or cyclic, but is preferably linear or branched, preferably an alkyl group having 1 to 4 carbon atoms, more preferably an alkyl group having 2 or 3 carbon atoms, and still more preferably an ethyl group or an isopropyl group. As the halogen atom, a fluorine atom, a chlorine atom, a bromine atom, and an iodine atom are exemplified, among these, a chlorine atom is preferable. It is particularly preferable that R³ and R⁴ each independently represent an ethyl group, an isopropyl group, or a chlorine atom.

In the formula (2), m represents an integer of 0 to 4, is preferably 0 to 2, and more preferably 0 or 1. In a case where m is an integer of 2 or more, plural R^{3,}s may be the same as or different from each other.

In the formula (2), n represents an integer of 0 to 3, is preferably 0 to 2, more preferably 0 or 1, and still more preferably 0. In a case where n is an integer of 2 or more, plural R^{4,}s may be the same as or different from each other.

In the formula (2), y represents an integer of 2 to 4, is preferably 2 or 3, and more preferably 2.

In the formula (2), X² represents a y-valent hydrocarbon chain having 2 to 300 carbon atoms which may contain an ether bond (-O-) and/or an ester bond (-(C=O)-O-).

Further, in the formula (2), plural (y number) benzophenone structures (in the formula (2), the structure expressed in parentheses) from which X² as a linking group is removed are included, but the structures may be the same as or different from each other, and are not particularly limited. From a viewpoint of synthesis, it is preferable that the structures be the same as each other.

In the compound represented by the formula (2), a substitution position to benzophenone is expressed as follows.

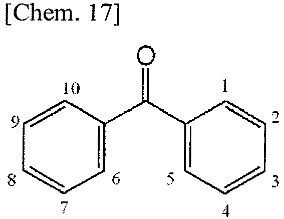

The substitution position of X² is 1- to 5-position, is preferably 2- or 3-position, and more preferably 3-position.

The substitution position of R³ is 6- to 10-position, is preferably 8- or 9-position, and more preferably 8-position.

Further, the substitution position of R⁴ is 1- to 5-position, and is preferably 2-, 3-, or 4-position.

It is preferable that the compound represented by the formula (2) be the compound represented by the formula (2').

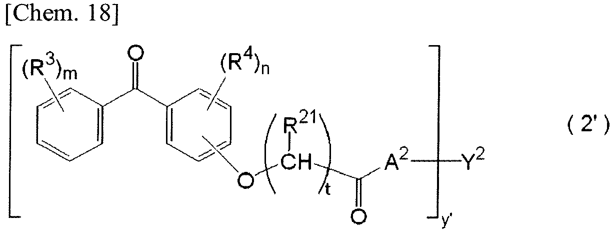

In the formula (2'), R³, R⁴, m, and n have the same definitions as R³, R⁴, m, and n in the formula (2), and the preferable ranges thereof are the same as those of the formula (1).

In the formula (2'), R²¹ each independently represent a hydrogen atom or an alkyl group having 1 to 4 carbon atoms, is preferably a hydrogen atom, a methyl group, or an ethyl group, and more preferably a hydrogen atom.

In the formula (2'), t represents an integer of 1 to 6, is preferably an integer of 1 to 3, more preferably an integer of 1 or 2, and still more preferably 1. In addition, when t is 2 or more, plural R²¹'s may be the same as or different from each other.

y' represents an integer of 2 to 4, is preferably 2 or 3, and more preferably 2.

Y² represents a residue obtained by removing hydrogen atoms of the y' number of hydroxy groups from a polyhydroxy group having the y' number of hydroxy groups. Specifically, Y² is preferably a residue obtained by removing hydrogen atoms of the x' number of hydroxy groups from a polyhydroxy compound selected from a group consisting of ethylene glycol, propylene glycol, butylene glycol, glycerin, trimethylolpropane, ditrimethylolpropane, and pentaerythritol, and is a residue obtained by removing hydrogen atoms of the entire hydroxy groups.

In the formula (2'), A² represents a group selected from a group consisting of the following (i) to (iii).
[Chem. 19]

*-[O(CHR¹²CHR¹³)ₐ]_{d}-** (i)

*-[O(CH₂)_{b}CO]_{d}-** (ii)

*-[O(CH₂)_{b}CO]_{(d-1)}-[O(CHR¹²CHR¹³)ₐ]-** (iii)

In the formulae (i) to (iii), one of R¹² and R¹³ represents a hydrogen atom and the other represents a hydrogen atom, a methyl group, or an ethyl group, a represents an integer of 1 or 2, b represents an integer of 4 or 5, d represents an integer of 1 to 20. Further, * represents a bonding position with carbonyl carbon, and ** represents a bonding position with Y¹.

A² is preferably a group represented by the formula (i) and more preferably *-(OCH₂CH₂)_{d}-**, *-(OCH₂CH₂CH₂CH₂)_{d}-**, or *-O(CH(CH₃)CH₂)_{d}-**. In this case, d is more preferably an integer of 3 to 10.

The molecular weight of the component B-2-2 is preferably 500 to 3000, is more preferably 800 to 2500, and still more preferably 1000 to 2000.

When the molecular weight is 500 or more, an ink composition in which elution of a compound from the cured film is suppressed and migration, odor, and blocking are suppressed can be obtained. In contrast, when the molecular weight is 3000 or less, steric hindrance of molecules is small and the degree of freedom of molecules in a liquid/film is maintained so that high sensitivity can be obtained.

Further, in a case where the component B-2-2 is a mixture of a plurality of compounds having different numbers of carbon atoms or the like, it is preferable that the weight average molecular weight be within the above-described range. The weight average molecular weight of the component B-2-2 can be measured in the same manner as that of the component B-2-1.

A specific example of the component B-2-2 will be described below, but the present invention is not limited to the compounds described below.

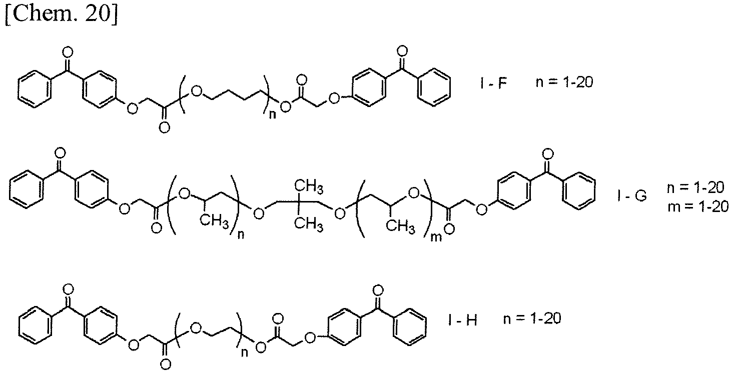

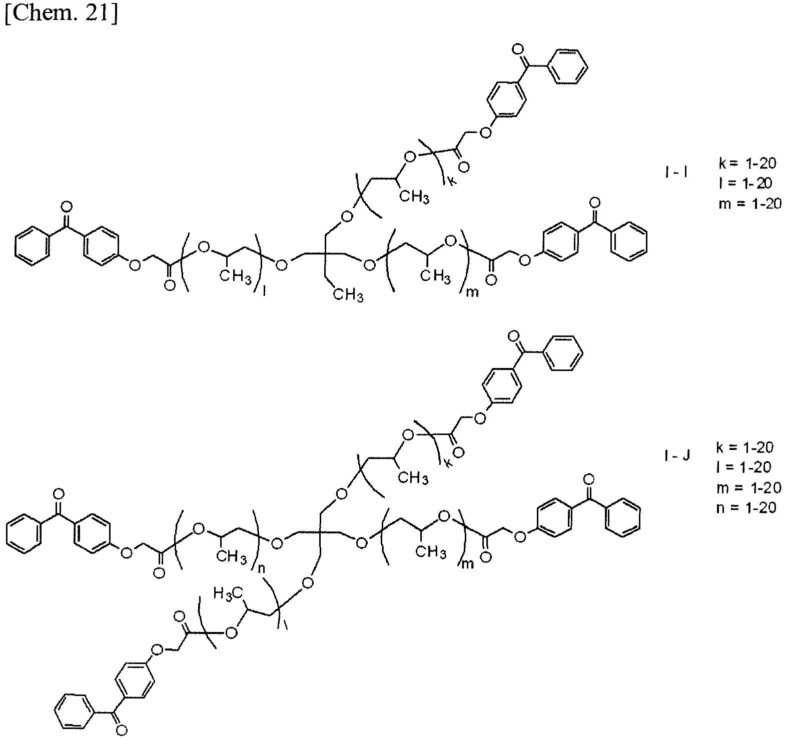

As the compound represented by the formula (2), a compound which is commercially available can be used. Specific examples thereof include Omnipol BP (Polybutyleneglycol bis(4-benzoylphenoxy)acetate, CAS No. 515136-48-8).

The compound represented by the formula (2) can be produced by a known reaction, which is not particularly limited, but, for example, the compound represented by the formula (2') can be prepared by reacting the compound represented by the formula (2-1) and the compound represented by the formula (2-2).

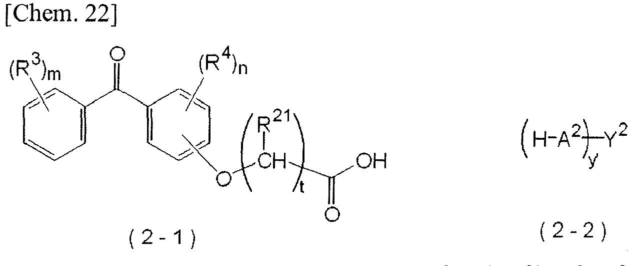

In the formulae (2-1) and (2-2), R³, R⁴, R²¹, A², Y², m, n, t, and y' have the same definitions as those of the formula (2') and the preferred ranges thereof are the same as those of the formula (2').

It is preferable that the above-described reaction be carried out under the presence of a solvent, and examples of an appropriate solvent include aromatic hydrocarbon such as benzene, toluene, and xylene.

Further, it is preferable that the reaction be carried out under the presence of a catalyst, examples of the catalyst include sulfonic acid (for example, p-toluenesulfonic acid or methanesulfonic acid), inorganic acid (for example, sulfuric acid, hydrochloric acid, or phosphoric acid), Lewis acid (aluminum chloride, boron trifluoride, or organotitanate).

The reaction temperature and the reaction time are not particularly limited.

After the reaction is completed, a product can be separated by isolating from a reaction mixture using known means, washing as needed, and drying.

From viewpoints of high sensitivity and suppressing the migration, odor, and blocking, the content of the component B-2 is preferably in the range of 0.1% by mass to 5% by mass and more preferably in the range of 2% by mass to 4% by mass of the entire ink composition.

Further, as the component B-2, the component B-2-1 is more preferable.

When the contents of the component B-1 and the component B-2 are respectively set as (B-1) and (B-2) (% by mass) based on the total mass of the ink composition, (B-1):(B-2) is preferably 1:10 to 10:1, more preferably 1:4 to 4:1, and still more preferably 1:2 to 2:1.

Further, the total content of the components B-1 and B-2 is preferably in the range of 2.0% by mass to 9.0% by mass, and more preferably in the range of 2.0% by mass to 6.0% by mass of the entire ink composition. When the content is within the above-described range, it is preferable because of excellent curability.

### (Component B-3) Compound represented by formula (3)

It is preferable that the ink composition of the present invention contain the (component B-3) compound represented by the formula (3) as the (component B) polymerization initiator.

By adding the compound represented by the formula (3), the compound represented by the formula (3) provides hydrogen atoms, functions as a co-initiator, and thus sensitivity is improved. Particularly, it is assumed that hydrogen atoms are provided to the component B-2 in an excited state and thus the sensitivity is highly improved. In addition, the migration and the odor are suppressed using the compound represented by the formula (3) compared to a case of using a low molecular amine compound. 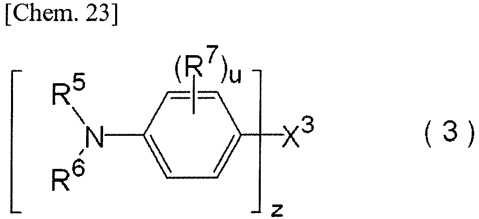 (in the formula (3), R⁵, R⁶, and R⁷ each independently represent a hydrogen atom or an alkyl group having 1 to 5 carbon atoms, z represents an integer of 2 to 4, u represents 4, and X³ represents a z-valent hydrocarbon chain having 2 to 300 carbon atoms, which may contain an ether bond and/or an ester bond).

In the formula (3), R⁵ and R⁶ each independently represent a hydrogen atom or an alkyl group having 1 to 5 carbon atoms and are preferably alkyl groups having 1 to 5 carbon atoms. The alkyl group having 1 to 5 carbon atoms may be linear, branched, or cyclic, but is preferably linear or branched, preferably an alkyl group having 1 to 4 carbon atoms, more preferably an alkyl group having 1 or 2 carbon atoms, and still more preferably a methyl group.

In the formula (3), R⁷ represents a hydrogen atom or an alkyl group having 1 to 5 carbon atoms, and the alkyl group having 1 to 5 carbon atoms may be linear, branched, or cyclic, but is preferably linear or branched, preferably an alkyl group having 1 to 4 carbon atoms, more preferably an alkyl group having 1 or 2 carbon atoms, and still more preferably a methyl group. Among these, in regard to R⁷, two or more thereof are preferably hydrogen atoms, three thereof are more preferably hydrogen atoms, and four thereof are still more preferably hydrogen atoms.

In the formula (3), z represents an integer of 2 to 4, is more preferably 2 or 3, and still more preferably 2.

In the formula (3), X³ represents a z-valent linking group formed of a z-valent hydrocarbon chain having 2 to 300 carbon atoms, which may contain an ether bond (-O-) and/or an ester bond (-(C=O)-O-).

Further, in the formula (3), plural (z number) structures (in the formula (3), the structure expressed in parentheses) from which X³ as a linking group is removed are included, but the structures may be the same as or different from each other, and are not particularly limited. From a viewpoint of synthesis, it is preferable that the structures be the same as each other.

The compound represented by the formula (3) is preferably the compound represented by the following formula (3').

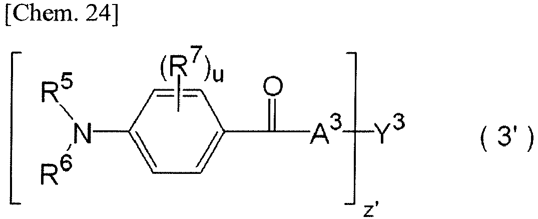

In the formula (3'), R⁵, R⁶, R⁷, and u have the same definitions as R⁵, R⁶, R⁷, and u in the formula (3), and the preferable ranges thereof are the same as those of the formula (3).

z' represents an integer of 2 to 4, is preferably 2 or 3, and more preferably 2.

Y³ represents a residue obtained by removing hydrogen atoms of the z' number of hydroxy groups from a polyhydroxy group having an ether bond or at least the z' number of hydroxy groups, and is preferably a residue obtained by removing hydrogen atoms of entire (z' number) hydroxy groups from a polyhydroxy compound having the z' number of hydroxy groups. Specifically, Y³ is preferably a residue obtained by removing hydrogen atoms of the z' number of hydroxy groups from a polyhydroxy compound selected from a group consisting of ethylene glycol, propylene glycol, butylene glycol, glycerin, trimethylolpropane, ditrimethylolpropane, and pentaerythritol, and more preferably a residue obtained by removing hydrogen atoms of the entire hydroxy groups.

In the formula (3'), A³ represents a group selected from a group consisting of the following (i) to (iii).
[Chem. 25]

*-[O(CHR¹²CHR¹³)ₐ]_{d}-** (i)

*-[O(CH₂)_{b}CO]_{d}-* * (ii)

*-[O(CH₂)_{b}CO]_{(d-1)}-[Q(CHR¹²CHR¹³)ₐ]-** (iii)

(In the formulae (i) to (iii), one of R¹² and R¹³ represents a hydrogen atom and the other represents a hydrogen atom, a methyl group, or an ethyl group, a represents an integer of 1 or 2, b represents an integer of 4 or 5, d represents an integer of 1 to 20. Further, * represents a bonding position with carbonyl carbon, and ** represents a bonding position with Y³. In addition, among the z' number of A³'s, d of at least one of them represents an integer of 1 to 20).

A³ is preferably a group represented by the formula (i) and more preferably *-(OCH₂CH₂)_{z}-**, *-(OCH₂CH₂CH₂CH₂)_{z}-**, or *-O(CH(CH₃)CH₂)_{z}-**. In this case, z is more preferably an integer of 3 to 10.

The molecular weight of the component B-3 is preferably 500 to 3000, is more preferably 800 to 2500, and still more preferably 1000 to 2000.

When the molecular weight is 500 or more, an ink composition in which elution of a compound from the cured film is suppressed and migration, odor, and blocking are suppressed can be obtained. In contrast, when the molecular weight is 3000 or less, steric hindrance of molecules is small and the degree of freedom of molecules in a liquid/film is maintained so that high sensitivity can be obtained.

Further, in a case where the component B-3 is a mixture of a plurality of compounds having different numbers of carbon atoms or the like, it is preferable that the weight average molecular weight be within the above-described range.

A specific example of the component B-3 will be described below, but the present invention is not limited to the compounds described below.

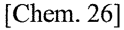

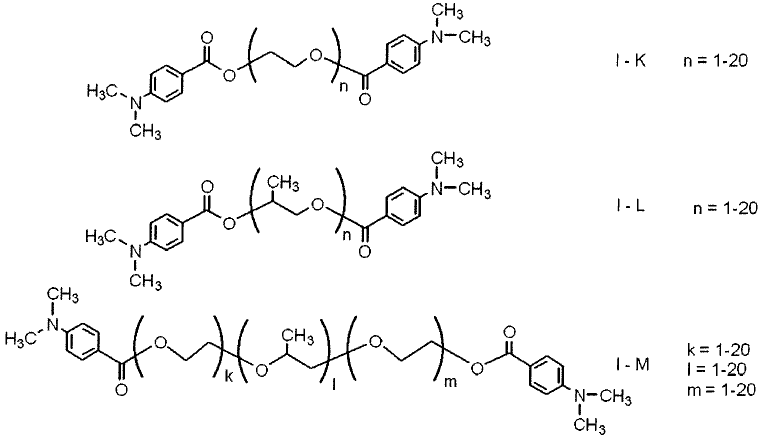

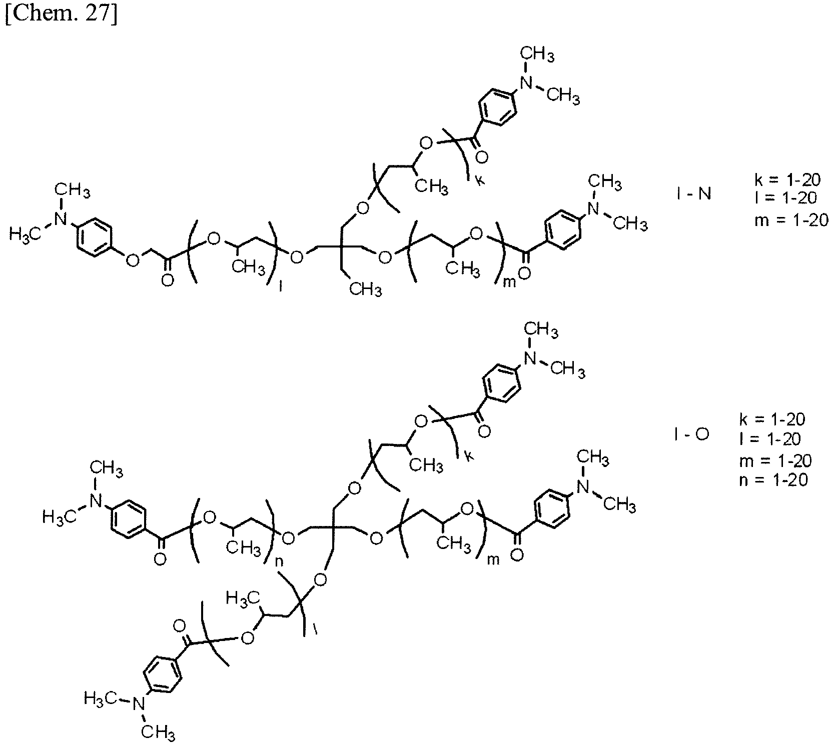

As the compound B-3, a product which is commercially available may be used, and Speedcure 7040 (Lambson, Inc.) is exemplified.

A synthesis method of the component B-3 is not particularly limited, for example, and the compound represented by the formula (I-K) can be obtained by carrying out a dehydrochlorination reaction (de-HCl reaction) of p-dimethylamino benzoic acid chloride and polyethylene glycol and by neutralizing at a base.

The component B-3 may be used alone or in combination of two or more kinds thereof.

The content of the component B-3 is preferably in the range of 0.5% by mass to 3.0% by mass, more preferably in the range of 0.8% by mass to 2.5% by mass, and still more preferably in the range of 1.0% by mass to 2.0% by mass of the entire ink composition. When the content thereof is within the above-described range, the sensitivity becomes highly improved while the ink composition is cured, which is preferable.

### (Component B-4) Other polymerization initiators

In the present invention, the ink composition may include (component B-4) other polymerization initiators in addition to the above-described components B-1 to B-3.

Further, among other polymerization initiators, the content of a polymerization initiator having a molecular weight of less than 340 is zero or 1% by mass or less based on the entire ink composition, preferably zero or 0.5% by mass or less, more preferably zero or 0.3% by mass or less, and most preferably zero from a viewpoint of suppressing the migration, odor, and blocking.

Examples of other polymerization initiators, which are not limited, include Speedcure ITX, Lucirin TPO, IRGACURE 184, and IRGACURE 907 (manufactured by BASF Corporation).

It is preferable that the ink composition of the present invention include a compound functioning as a sensitizer (hereinafter, also referred to as a "sensitizer") as a polymerization initiator because the compound absorbs specific active energy rays and accelerates decomposition of the polymerization initiator.

Examples of the sensitizer include polynuclear aromatics (for example, pyrene, perylene, triphenylene, and 2-ethyl-9,10-dimethoxy anthracene), xanthenes (for example, fluorescein, eosin, erythrosine, rhodamine B, and rose bengal), cyanines (for example, thiacarbocyanine and oxacarbocyanine), merocyanines (for example, merocyanine and carbomerocyanine), thiazines (for example, thionine, methylene blue, and toluidine blue), acridines (for example, acridine orange, chloroflavine, and acriflavine), anthraquinones (for example, anthraquinone), squaryliums (for example, squarylium), and coumarines (for example, 7-diethylamino-4-methyl coumarin).

Moreover, sensitizers may be used alone or in combination of two or more kinds thereof.

The total content of the (component B) polymerization initiator together with other polymerization initiators is in the range of 2.0% by mass to 10.0% by mass, and preferably in the range of 2.0% by mass to 7.0% by mass of the entire ink composition. When the content thereof is within the above-described range, the curability becomes excellent.

### (Component C) Surfactant

A surfactant may be added to the ink composition of the present invention because the surfactant provides stabilized ejecting properties for a long period of time.

As a surfactant, surfactants described in JP1987-173463A (JP-S62-172363A) and JP1987-183457A (JP-S62-183457A) can be exemplified. Examples thereof include anionic surfactants such as dialkyl sulfosuccinate salts, alkyl naphthalene sulfonate salts, and fatty acid salts, nonionic surfactants such as polyoxyethylene alkyl ethers, polyoxyethylene alkyl aryl ethers, acetylene glycols, or polyoxyethylene·polyoxypropylene block copolymers, and cationic surfactants such as alkylamine salts and quaternary ammonium salts. Further, an organic fluoro compound may be used instead of the surfactants. The organic fluoro compound is preferably hydrophobic. As the organic fluoro compound, for example, a fluorine-based surfactant, an oily fluorine compound (for example, fluorine oil), a solid fluorine compound resin (for example, tetrafluoroethylene resin), and compound described in JP1982-9053B (JP-S57-9053B, section 8 to 17) and JP1987-135826A (JP-S62-135826A) are exemplified.

The content of the surfactant in the ink composition of the present invention is appropriately selected for the purpose of use, and is preferably in the range of 0.0001% by mass to 1% by mass based on the total mass of the ink composition.

### (Component D) Colorant

It is preferable that the ink composition of the present invention include a colorant for improving visibility of a formed imaging unit. The colorant is not particularly limited, but a pigment and an oil-soluble dye which are rich in color reproducibility are preferable, and the colorant can be used by being appropriately selected from among known colorants such as soluble dyes or the like. As a colorant, it is preferable to select a compound which does not function as a polymerization inhibitor from a viewpoint of not degrading the sensitivity of the curing reaction due to the active radiation.

As the pigment which can be used in the present invention, which is not particularly limited, for example, organic or inorganic pigments having the following numbers described in the color index can be used.

Examples of red or magenta pigments to be used include Pigment Red 3, 5, 19, 22, 31, 38, 42, 43, 48:1, 48:2, 48:3, 48: 4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, and 36, examples of blue or cyan pigments include Pigment Blue 1, 15, 15:1, 15:2, 15:3, 15:4, 15:6, 16, 17-1, 22, 27, 28, 29, 36, and 60, examples of green pigments include Pigment Green 7, 26, 36, and 50, examples of yellow pigments include Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193, examples of black pigments include Pigment Black 7, 28, and 26, and examples of white pigments include Pigment White 6, 18, and 21 according to the purpose.

In the present invention, a disperse dye can be used in a range of being dissolved in a hydrophobic organic solvent. The disperse dyes generally include water-soluble dyes, but are preferably used in a range of being dissolved in a hydrophobic organic solvent in the present invention.

Specific preferred examples of the dispersed dyes include C.I. Disperse Yellow 5, 42, 54, 64, 79, 82, 83, 93, 99, 100, 119, 122, 124, 126, 160, 184:1, 186, 198, 199, 201, 204, 224, and 237; C.I. Disperse Orange 13, 29, 31:1, 33, 49, 54, 55, 66, 73, 118, 119, and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. Disperse Green 6:1 and 9.

It is preferable that the colorant be appropriately dispersed in the ink composition after the colorant is added to the ink composition. For dispersion of the colorant, various dispersing devices, for example, a ball mill, a sand mill, an attritor, a roll mill, an agitator, a Henschel mixer, a colloid mill, an ultrasonic homogenizer, a pearl mill, a wet jet mill, and a paint shaker can be used.

The colorant may be directly added together with each component during the preparation of the ink composition. Further, for improving dispersibility, the colorant is added to a dispersion medium such as a solvent or a polymerizable compound being used in the present invention in advance, uniformly dispersed or dissolved therein, and then can be blended.

In the present invention, in order to avoid problems such as degradation of solvent resistance and Volatile Organic Compound (VOC) of a remaining solvent in a case where a solvent remains in a cured image, it is preferable that the colorant be added to a dispersion medium such as a polymerizable compound in advance and then be blended. Further, when only considering dispersion suitability, it is preferable to select a monomer with low viscosity as a polymerizable compound used for addition of the colorant. The colorant may be used by appropriately selecting one or two or more kinds thereof depending on the purpose of use of the ink composition.

Moreover, when a colorant such as a pigment which is present as a solid in the ink composition is used, it is preferable to select a colorant, a dispersant, and a dispersion medium and set dispersion conditions and filtration conditions such that the average particle size of colorant particles is preferably 0.005 µm to 0.5 µm, more preferably in the range of 0.01 µm to 0.45 µm, and still more preferably in the range of 0.015 µm to 0.4 µm. By controlling the particle size, it is possible to suppress clogging of a head nozzle and maintain storage stability, transparency, and curing sensitivity of the ink composition, which is preferable.

The content of the colorant in the ink composition can be appropriately selected depending on the color and the purpose of use, but is preferably in the range of 0.01% by mass to 30% by mass based on the total mass of the ink composition.

### (Component E) Dispersant

It is preferable that the ink composition of the present invention include a dispersant. Particularly, in a case of using a pigment, it is preferable to include a dispersant for allowing a pigment to be reliably dispersed into the ink composition. As a dispersant, a polymer dispersant is preferable. Further, the "polymer dispersant" in the present invention means a dispersant having a weight average molecular weight of 1000 or more.

Examples of the polymer dispersant include DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie GmbH); EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by Efca Additive Inc.); Disperse Aid 6, Disperse Aid 8, Disperse Aid 15, and Disperse Aid 9100 (manufactured by Sannopuko Co., Ltd.); various SOLSPERSE dispersants such as SOLSPERSE 3000, 5000, 9000, 12000, 13240, 13940, 17000, 22000, 24000, 26000, 28000, 32000, 36000, 39000, 41000, and 71000 (manufactured by Noveon, Inc.); Adeka Pluronic L31, F38, L42, L44, L61, L64, F68, L72, P95, F77, P84, F87, P94, L101, P103, F108, L121, and P-123 (manufactured by ADEKA Corporation), and IONET S-20 (manufactured by Sanyo Chemical Industries, Ltd.); Disparlon KS-860, 873SN, 874 (polymer dispersant), #2150 (aliphatic polyvalent carboxylic acid), and #7004 (polyether ester type) (manufactured by Kusumoto Chemicals Co., Ltd.).

The content of the dispersant in the ink composition can be appropriately selected depending on the purpose of use, but is preferably in the range of 0.05% by mass to 15% by mass based on the total mass of the ink composition.

### <Other components>

The ink composition of the present invention includes an ultraviolet absorber, an antioxidant, an anti-fading agent, conductive salts, a solvent, a polymer compound, and a basic compound in addition to the above-described respective components as needed. As those other components, known components can be used, and a component described in JP2009-221416A can be exemplified.

Further, it is preferable that the ink composition of the present invention include a polymerization inhibitor from the viewpoint of storage stability and suppressing head clogging.

The content of the polymerization initiator is preferably in the range of 200 ppm to 20000 ppm based on the total mass of the ink composition of the present invention.

Examples of the polymerization initiator include a nitroso-based polymerization initiator, a hindered amine-based polymerization initiator, hydroquinone, benzoquinone, p-methoxyphenol, TEMPO, TEMPOL, and Cupferron Al.

### <Physical properties of ink>

In the present invention, in consideration of ejecting properties, an ink composition with a viscosity of 40 mPa·s or less at 25°C is preferably used. The viscosity thereof is more preferably in the range of 5 mPa·s to 40 mPa·s and still more preferably in the range of 7 mPa·s to 30 mPa·s. Further, the viscosity at ejection temperature (preferably in the range of 25°C to 80°C and more preferably in the range of 25°C to 50°C) is preferably in the range of 3 mPa·s to 15 mPa·s and more preferably in the range of 3 mPa·s to 13 mPa·s. It is preferable that the composition ratio of the ink composition of the present invention be appropriately adjusted such that the viscosity is within the above-described range. By setting the viscosity at room temperature (25°C) to be high, penetration of the ink composition into a recording medium can be avoided and uncured monomers can be reduced when a porous recording medium (support) is used. Moreover, ink bleeding at the time of droplet impact of the ink composition can be prevented so that image quality is improved, which is preferable.

The surface tension of the ink composition of the present invention at 25°C is preferably in the range of 20 mN/m to 40 mN/m, more preferably in the range of 20.5 mN/m to 35.0 mN/m, still more preferably in the range of 21 mN/m to 30.0 mN/m, and particularly preferably in the range of 21.5 mN/m to 28.0 mN/m. When the surface tension thereof is within the above-described range, a printed matter with excellent blocking resistance can be obtained.

Further, as a method of measuring the surface tension of the ink composition at 25°C, a known method can be used, but it is preferable to measure the surface tension using a hanging ring method or a Wilhelmy method. For example, a method of measuring the surface tension using an automatic surface tension meter CBVP-Z (manufactured by Kyowa Interface Science Co., Ltd.) or a method of measuring the surface tension using SIGMA702 (manufactured by KSV INSTRUMENTS Ltd.) can be preferably used.

### (Ink-jet recording method, ink-jet recording apparatus, and printed matter)

An ink-jet recording method is a method of ejecting the ink-jet ink composition on a recording medium (such as a support, and a recording material) for ink-jet recording, irradiating the ink-jet ink composition ejected on the recording medium with active energy rays, and forming an image by curing the ink-jet ink composition.

More specifically, it is preferable that the ink-jet recording method includes a process (a¹) of ejecting the ink-jet ink composition on the recording medium and a process (b¹) of irradiating the ejected ink-jet ink composition with active rays to cure the ink-jet ink composition.

An image is formed by the ink composition which is cured on the recording medium by the ink-jet recording method including the above-described processes (a¹) and (b¹).

Moreover, it is preferable that the ink-jet recording method be performed in a multi-pass mode, which means that the processes (a¹) and (b¹) are carried out twice or more on the same portion of the recording medium, that is, a same part is printed by overstriking. When printing is carried out in the multi-pass mode, an excellent image can be obtained due to glossiness using the ink composition.

The printed matter of the present invention is a printed matter recorded using the ink-jet recording method of the present invention.

The ink composition of the present invention is suitable for package printing, particularly, package printing for food packaging. The ink-jet recording method of the present invention including the following processes is carried out in the following order.
(Process a) a process of ejecting the ink-jet ink composition from the ink-jet head and printing the composition on a support for package having a thickness of 150 µm or less, and
(Process b) a process of irradiating the ejected ink-jet ink composition with active rays.

The process (a¹) and the process (a) in the ink-jet recording method of the present invention can be performed using an ink-jet recording apparatus described below.

### <Ink-jet recording apparatus>

As the ink-jet recording apparatus which can be used for the ink-jet recording method of the present invention, which is not particularly limited, a known ink-jet recording apparatus capable of achieving target resolution can be arbitrarily selected to be used. That is, as long as known ink-jet recording apparatuses including commercially available products are used, all of the apparatuses can eject the ink composition to the recording medium in the process (a¹) and in the process (a) of the ink-jet recording method of the present invention.

Examples of the ink-jet recording apparatus which can be used in the present invention include apparatuses having an ink supply system, a temperature sensor, and an active energy ray source.

The ink supply system is formed of an original tank including the ink composition of the present invention, a supply pipe, an ink supply tank immediately front of the ink-jet head, a filter, and a piezoelectric ink-jet head. The piezoelectric ink-jet head can drive multi-size dots of preferably in the range of 1 pl to 100 pl and more preferably in the range of 8 pl to 30 pl so as to be ejected with the resolution of preferably in the range of 320x320 dpi to 4000x4000 dpi, more preferably in the range of 400x400 dpi to 1600x1600 dpi, and still more preferably 720x720 dpi. In addition, "dpi" in the present invention represents the number of dots per 2.54 cm.

As described above, since it is preferable that the temperature of the ink composition of the present invention to be ejected be constant, the ink-jet recording apparatus preferably includes stabilizing means for the temperature of the ink composition. The areas whose temperatures are required to be constant are a pipe system from an ink tank (an intermediate tank in a case where the intermediate tank is present) to a nozzle injection surface and the entire members. That is, insulation and heating can be carried out from the ink supply tank to the ink-jet head portion.

It is preferable that a method of controlling the temperature, which is not particularly limited, include providing a plurality of temperature sensors in respective areas of the pipes and heating and controlling according to the flow rate of the ink composition and ambient temperature. The temperature sensor can be provided in the vicinity of the ink supply tank and the nozzle of the ink-jet head. Further, it is preferable that a head unit being heated be thermally blocked or insulated such that the apparatus body is not affected by the temperature of the outside. For reduction of start-up time of the printer required for heating or for reduction of loss of thermal energy, it is preferable to insulate from other areas and to reduce heat capacity of an entire heating unit.

Since an active ray curable ink composition like the ink composition of the present invention has the viscosity higher than that of the aqueous ink composition to be used for the ink composition for ink-jet recording in general, viscosity variation due to temperature variation at the time of ejection is large. The viscosity variation of the ink composition largely influences on the change of the droplet size and the change of the droplet ejection speed, and causes image degradation. Therefore, it is necessary for the temperature of the ink composition at the time of ejection to be maintained as constant as possible. Consequently, in the present invention, the control width of the temperature of the ink composition is preferably ±5°C of the set temperature, more preferably ±2°C of the set temperature, and still more preferably ±1°C of the set temperature.

Next, process (b¹) and process (b) according to the invention will be described.

The ink composition ejected on the recording medium is cured by performing irradiation with active energy rays (active rays). This is because the polymerization initiator included in the ink composition of the present invention is decomposed by the irradiation with the active energy rays, polymerization initiating species such as radical polymerization initiating species are generated, and the polymerization reaction of the polymerizable compound is generated and accelerated by the functions of the initiating species. At this time, when a sensitizer is present together with the polymerization initiator in the ink composition, the sensitizer in the system absorbs the active energy rays and enters an excited state, decomposition of the polymerization initiator is accelerated due to contact with the polymerization initiator, and the curing reaction with higher sensitivity can be achieved.

Here, as the active energy rays being used, α-rays, γ-rays, electron beams, X-rays, ultraviolet rays, visible rays, or infrared light can be used. The peak wavelength of the active energy ray, which depends on absorption properties of a sensitizer, is preferably in the range of 200 nm to 600 nm, more preferably in the range of 300 nm to 450 nm, and still more preferably in the range of 320 nm to 420 nm, and it is particularly preferable that the active energy rays be ultraviolet rays having the peak wavelength of 340 nm to 400 nm.

Further, a polymerization initiation system of the ink composition of the present invention has sufficient sensitivity even in a case of low output active energy rays. Therefore, it is appropriate for the ink composition to be cured with an illuminance of an exposure surface of preferably in the range of 10 mW/cm² to 4000 mW/cm² and more preferably in the range of 20 mW/cm² to 2500 mW/cm².

As the active energy ray source, a mercury lamp or a gas·solid laser is mainly used, and as a light source used for curing the ink composition for ultraviolet ray curable ink-jet recording, a mercury lamp or a metal halide lamp is widely known. However, from a viewpoint of protecting the environment in recent days, "mercury-free" is highly demanded, replacement to a GaN semiconductor UV light emitting device is industrially and environmentally highly useful. Further, since an LED (UV-LED) and an LD (UV-LD) are small in size, long in service life, highly efficient, and at low cost, the LED and the LD are expected as light sources for photocurable ink-jet.

Moreover, the light emitting diode (LED) and the laser diode (LD) can be used as sources of the active energy rays. Particularly, in a case where an ultraviolet source is necessary, an ultraviolet LED and an ultraviolet LD can be used. For example, a purple LED (manufactured by Nichia Corporation) in which the main emission spectrum has a wavelength of 365 nm to 420 nm is commercially available. Further, in a case where a shorter wavelength is necessary, an LED which can emit active energy rays whose wavelengths are centered between 300 nm and 370 nm is disclosed in US6084250A. Furthermore, other ultraviolet LEDs are also available and irradiation of active rays having wavelengths of different ultraviolet bandwidths can be performed. In the present invention, a particularly preferable source of active energy rays is an UV-LED and an UV-LED having a peak wavelength of 340 nm to 400 nm is also particularly preferable.

In addition, the maximum illuminance of an LED on the recording medium is preferably in the range of 10 mW/cm² to 2000 mW/cm², more preferably in the range of 20 mW/cm² to 1000 mW/cm², and particularly preferably in the range of 50 mW/cm² to 800 mW/cm².

It is appropriate that the ink composition of the present invention is irradiated with active energy rays preferably for 0.01 seconds to 120 seconds and more preferably for 0.1 seconds to 90 seconds.

Irradiation conditions of the active energy rays and a basic irradiation method are disclosed in JP1985-132767A (JP-S60-132767A). Specifically, the irradiation can be performed by providing light sources on both sides of a head unit including an ejection apparatus of an ink composition and scanning the head unit and light sources using a so-called shuttle system. The irradiation of active energy rays is performed for a certain period of time (preferably for 0.01 seconds to 0.5 seconds, more preferably for 0.01 seconds to 0.3 seconds, and still more preferably for 0.01 seconds to 0.15 seconds) after the ink composition is impacted. By controlling the time from the impact of the ink composition to the irradiation to be extremely short, it is possible to prevent bleeding of the ink composition impacted on the recording medium before being cured. Further, since a porous recording medium can be exposed before the ink composition is penetrated into a deep portion in which a light source cannot reach, it is possible to prevent unreacted residual monomers from generating, which is preferable.

In addition, the curing may be completed by another light source which is not driven. Further, as the irradiation method, a method of using optical fibers and a method of irradiating a mirror surface provided on the side surface of a head unit with collimated light (UV light) and irradiating a recording unit with reflected light can be exemplified. Such a curing method can be applied to the ink-jet recording method of the present invention.

By employing the above-described ink-jet recording method, diameters of dots of the impacted ink composition can be maintained to be constant with respect to various recording media with different wettability on the surface so that the image quality is improved. Further, in order to obtain a color image, it is preferable to sequentially overlap ink compositions to one another from lower brightness to higher brightness. By sequentially overlapping ink compositions from lower brightness to higher brightness, irradiated rays can easily reach the lower portion of the ink composition so that excellent curing sensitivity, reduction in residual monomers, and improvement of adhesion properties can be expected. Further, regarding irradiation, it is possible to expose by ejecting all colors of ink compositions at once, but it is preferable to expose ink compositions for every color from a viewpoint of acceleration of curing.

In this manner, an image can be formed on the surface of the recording medium by the ink composition of the present invention being cured with high sensitivity through irradiation with active energy rays.

The ink composition of the present invention can be preferably used as an ink set formed of a plurality of inks for ink-jet recording.

In the ink-jet recording method of the present invention, order of the respective colored ink compositions to be ejected is not particularly limited, but it is preferable to provide ink compositions to the recording medium in order from higher brightness, and it is preferable to provide colored ink compositions to the recording medium in order of yellow, cyan, magenta, and black in a case where yellow, cyan, magenta, and black are used. Further, it is preferable to provide ink compositions to the recording medium in order of white, yellow, cyan, magenta, and black in a case where white is added thereto. In addition, the present invention is not limited thereto, the ink set of the present invention including at least a total of 7 colors of ink compositions, which are yellow, light cyan, light magenta, cyan, magenta, black, and white can be preferably used, and it is preferable to provide ink compositions to the recording medium in order of white, light cyan, light magenta, yellow, cyan, magenta, and black in this case.

In the present invention, the recording medium is not particularly limited, and recording mediums known as a support or a recording material can be used. Examples thereof include paper, paper on which plastic (for example, polyethylene, polypropylene, or polystyrene) is laminated, a metal plate (for example, aluminum, zinc, or copper), a plastic film (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal), paper and a plastic film on which the above-described metals are laminated or deposited. Further, as the recording medium in the present invention, a non-absorbing recording medium can be preferably used.

The ink composition of the present invention is used for package printing. A recording medium which is relatively thin as a recording medium is used, and the thickness is 150 µm or less, preferably 120 µm or less, still more preferably 90 µm or less, and particularly preferably 50 µm or less. In the ink composition of the present invention, even when a relatively thin recording medium is used, the problem of shrinkage is prevented.

As the recording medium, polypropylene, PET, nylon, polyethylene, or polyvinyl alcohol is exemplified, among these, polypropylene, PET, or nylon is preferable.

### Examples

The present invention will be described in detail with reference to Examples and Comparative Examples below.

Further, "parts" in the description below indicates "parts by mass" unless otherwise noted.

Materials used in the present invention are as follows.

### (Colorants)

- IRGALITE BLUE GLVO (cyan pigment, manufactured by BASF Japan Ltd.)
- CINQUASIA MAGENTA RT-355-D (magenta pigment, manufactured by BASF Japan Ltd.)
- NOVOPERM YELLOW H2G (yellow pigment, manufactured by Clariant K.K.)
- SPECIAL BLACK 250 (black pigment, manufactured by BASF Japan Ltd.)
- TIPAQUE CR60-2 (white pigment, manufactured by Ishihara Sangyo Kaisha, Ltd.)

### (Dispersants)

- SOLSPERSE 32000 (dispersant manufactured by Noveon, Inc.)
- SOLSPERSE 36000 (dispersant manufactured by Noveon, Inc.)

### (Monomers)

- SR306H (tripropylene glycol diacrylate, manufactured by Sartomer Company, viscosity at 25°C: 15.0 mPa·s)
- SR341 (3-methyl-1,5-pentanediol diacrylate, manufactured by Sartomer Company, viscosity at 25°C: 6.0 mPa·s)
- NK ESTER A-DOD-N (1,9-nonanediol diacrylate, manufactured by Shin-Nakamura Chemical Co., Ltd., viscosity at 25°C: 9.0 mPa·s)
- CD595 (1,10-decanediol diacrylate, manufactured by Sartomer Company, viscosity at 25°C: 10.0 mPa·s)
- CD262 (1,12-dodecanediol diacrylate, manufactured by Sartomer Company, viscosity at 25°C: 12.0 mPa·s)
- SR9003 (PO-modified neopentyl glycol diacrylate, manufactured by Sartomer Company, viscosity at 25°C: 15.0 mPa·s)
- SR339 (phenoxyethylacrylate, manufactured by Sartomer Company)
- SR350 (trimethylolpropane triacrylate, manufactured by Sartomer Company)
- V-CAP (N-vinyl caprolactam, manufactured by ISP Company)

### (Polymerization initiator: component B-1)

- IRGACURE 369 (2-benzyl-2-dimethylamino-1-(4-morpholinophenyl)-butane-1-one, manufactured by BASF Japan Ltd., molecular weight: 366)
- IRGACURE 379 (2-dimethylamino-2-(4-methylbenzyl)-1-(4-morpholine-4-yl-phenyl)-butane-1-one, manufactured by BASF Japan Ltd., molecular weight: 380)
- Omnipol 910 (polyethylene glycol 200 di{β-4-[4-(2-dimethylamino-2-benzyl)butanoylphenyl]piperazine}propionate, manufactured by Insight High Technology Co., Ltd., average molecular weight: 1032)
- IRGACURE 819 (bis(2,4,6-trimethylbenzoyl)phenyl phosphine oxide, manufactured by BASF Japan Ltd., molecular weight: 418)

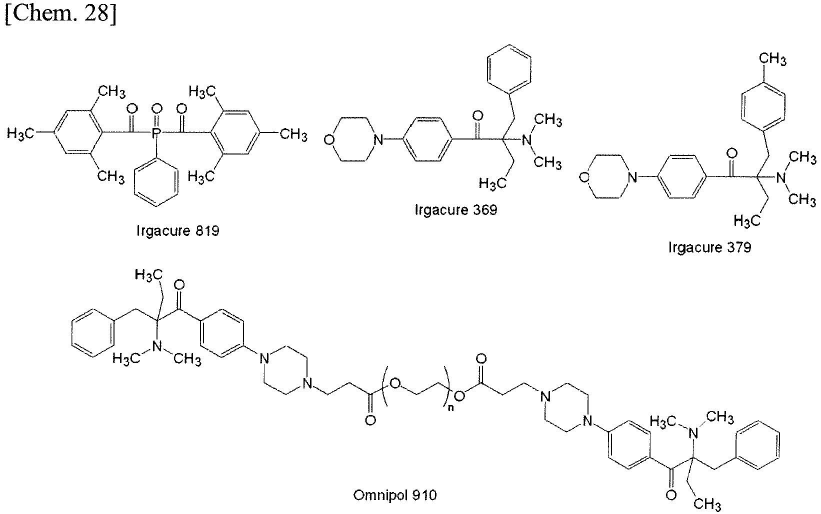

### (Polymerization initiator B-2)

- Speedcure 7010 (compound I-B, Lambson, Inc.)
- Omnipol TX (compound I-A, Rahn AG, Inc., molecular weight: 820)
- Omnipol BP (compound I-F, Rahn AG, Inc., molecular weight: 960)
- Compound I-D (k, l, and m = 3)
- Compound I-J (k, l, m, and n = 2)

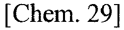

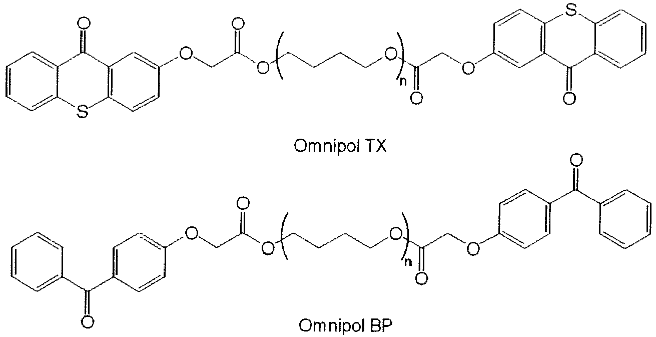

### <Synthesis of compound I-D>

A dehydration condensation reaction between 2-mercapto benzoic acid and 4-chlorophenoxy acetic acid was carried out in sulfuric acids to obtain 1-chloro-4-phenoxyacetyl thioxanthone. Further, the resultant was reacted with thionyl chloride to synthesize acid chloride and then reacted with PO-modified trimethylol propane (k, l, and m = 3), thereby obtaining a compound I-D.

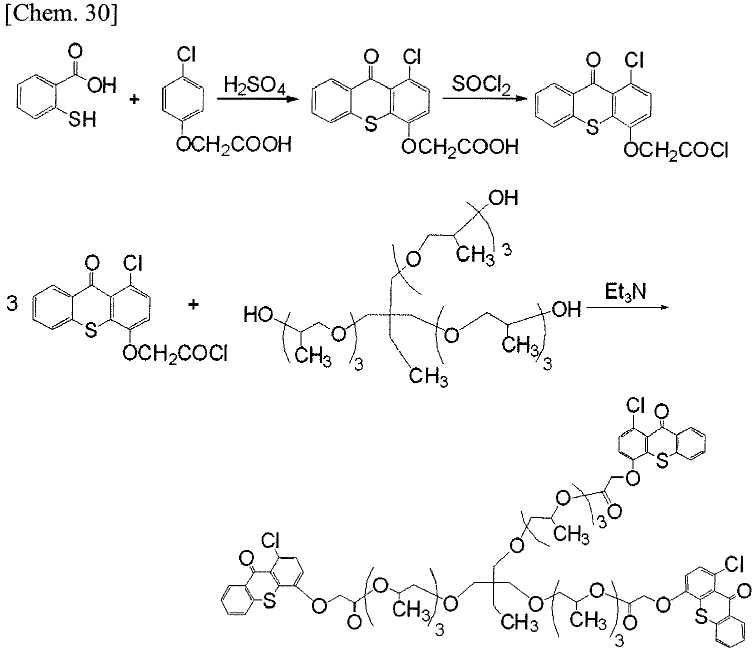

### <Synthesis of compound I-J>

A reaction between 3-phenoxy acetyl chloride benzophenone and PO-modified pentaerythritol was carried out, and a compound I-J was obtained.

### (Other polymerization initiators)

- Speedcure 7040 (compound I-N, polymeric amine compound, manufactured by Lambson, Inc.)
- Speedcure ITX (compound I-N, isopropylthioxanthone, manufactured by Lambson, Inc., molecular weight: 254)
- LUCIRIN TPO (2,4,6-trimethyl benzoyl diphenyl phosphine oxide, manufactured by BASF Corporation, molecular weight: 316)
- IRGACURE 184 (1-hydroxycyclohexylphenylketone, manufactured by BASF Corporation, molecular weight: 204)
- IRGACURE 907 (2-methyl-1-[4-(methylthiophenyl)]-2-morpholinopropane-1-one, manufactured by BASF Corporation, molecular weight: 279)

### (Oligomer)

- CN964 A85 (including bifunctional aliphatic urethane acrylate and 15% by mass of tripropylene glycol diacrylate, manufactured by Sartomer Company)

### (Polymerization inhibitor)

- FIRSTCURE ST-1 (polymerization inhibitor, mixture of tris(N-nitroso-N-phenylhydroxyamine)aluminum salt (10% by mass) and phenoxy ethyl acrylate (90% by mass), manufactured by Chem First, Inc.)

### (Surfactant)

- BYK307 (silicone-based surfactant, manufactured by BYK Chemie GmbH)

### (Preparation of respective mill bases)

### <Preparation of cyan mill base A>

300 parts by mass of IRGALITE BLUE GLVO, 620 parts by mass of SR9003, and 80 parts by mass of SOLSPERSE 32000 were mixed with each other by stirring, and a cyan mill base A was obtained. In addition, the preparation of the cyan mill base A was carried out by putting respective components into a disperser motor mill M50 (manufactured by Eiger. Corp.) and allowing the respective components to be dispersed at a peripheral speed of 9 m/s for 4 hours using zirconia beads having a diameter of 0.65 mm.

### <Preparation of magenta mill base B, yellow mill base C, black mill base D, and white mill base E>

In the same manner as that of the cyan mill base A, a magenta mill base B, a yellow mill base C, a black mill base D, and a white mill base E were prepared with the compositions listed in Table 1 under the dispersion conditions.

**[Table 1]**

| Mill base | | Cyan mill base A | Magenta mill base B | Yellow mill base C | Black mill base d | White mill base E |
|---|---|---|---|---|---|---|
| Compositions (parts) | IRGALITE BLUE GLVO | 300 | - | - | - | - |
| | CINQUASIA MAGENTA RT-355-D | - | 300 | - | - | - |
| | NOVOPERM YELLOW H2G | - | - | 300 | - | - |
| | SPECIAL BLACK 250 | - | - | - | 400 | - |
| | TIPAQUE CR60-2 | - | - | - | - | 500 |
| | SR9003 | 620 | 600 | 600 | 520 | 440 |
| | SOLSPERSE 32000 | 80 | 100 | 100 | 80 | 60 |
| Dispersion conditions | Peripheral speed (m/s) | 9 | 9 | 9 | 9 | 9 |
| | Time (time) | 4 | 10 | 10 | 7 | 4 |

### (Examples 1 to 30 and Comparative Examples 1 to 9)

### <Method of producing ink composition>

Respective ink compositions were obtained by mixing and stirring the materials listed in Tables 2 to 4 with the amounts (parts by mass) listed in Tables 2 to 4. Further, "-" in Tables means that corresponding components are not added.

### <Ink-jet recording method: metal halide lamp>

An ink-jet image was printed using a UV curable ink-jet printer LUXELJET UV250 (manufactured by Fujifilm Graphic System Co., Ltd.).

A 100% solid image was printed with a resolution of 600x450 dpi on a Pylen film OTP3162 (A4 size, polypropylene sheet, 40 µm). Moreover, the device performs drawing by scanning an ink-jet head, UV lamps are installed on both ends of the head one by one, and the UV irradiation is performed twice by head scanning which is carried out by once. The solid image was formed by alternatively repeating ink drops and UV irradiation using two lamps by eight times on the same area of a support. SUB ZERO 085 H bulb lamp unit (manufactured by Integration Technology, Inc.) was installed as the lamp and the intensity of the both ends of lamps was set to the level 3.

During printing, when the illuminance of the exposed surface was measured, the value was 980 mW/cm². Further, the time taken from the ejection to exposure was 0.2 seconds to 0.3 seconds. In addition, ejection was performed with an ejection amount of 6 pL to 42 pL per one drop.

### <Migration evaluating method>

10 mL of a mixed solution of water and ethanol with the mixed ratio of 70 to 30 was dropped on the surface of a printed matter, the whole printed matter was put in a glass sealed container so as for the mixed solvent not to be volatilized, and then the resultant was left alone at 40°C for 10 days. Subsequently, the total amount of elution (overall migration amount: OML) from the film in the mixed solution of water and ethanol was calculated and evaluation was performed in levels 1 to 5. Further, measurement of the total amount of elution was carried out by volatilizing the mixed solution of water and ethanol and measuring the mass of the remaining components after the resultant was left alone for 10 days.
5: an elution amount of 50 ppb or less
4: an elution amount of more than 50 ppb to 200 ppb
3: an elution amount of more than 200 ppb to 1000 ppb
2: an elution amount of more than 1000 ppb to 2000 ppb
1: an elution amount of more than 2000 ppb

### <Odor evaluation method>

The image obtained by the ink-jet recording method was encapsulated in a plastic bag with a zip having a dimension of 30 cm x 30 cm, and then left alone for 24 hours.

Subsequently, the zip was released and the odor was evaluated. The average of 10 people was employed as a result of evaluation.
5: approximately odorless
4: there is an odor slightly, but almost does not care about the smell
3: there is a certain degree of odor, but the odor is not discomfort
2: there is a strong odor
1: there is an extremely strong odor

### <Evaluation of blocking resistance>

A total of 5 sheets of printed matters were created using the ink-jet recording method, and the obtained images were superposed thereon, a weight of 5 kg was placed on the top portion, and left alone in an oven at 30°C for 24 hours, and then sticking condition between images was evaluated.
5: No sticking between printed matters
4: there is sticking between printed matters, but can be easily torn off using a hand so that the image has not been transferred to the rear surface of the support on the top portion
3: there is sticking between printed matters, when the sticking is torn off using a hand, the image has been slightly transferred to the rear surface of the support on the top portion
2: there is sticking between printed matters, when the sticking is torn off using a hand, the image has been largely transferred to rear surface of the support on the top portion.
1: there is sticking between printed matters, the printed matters are difficult to tear off from each other using hand

### <Evaluation of curability>

Swab was immersed in IPA (isopropyl alcohol), the surface of the printed matter was rubbed with the swab, and the number of the support being exposed was calculated.
5: more than 50 times
4: more than 30 times to 50 times
3: more than 10 times to 30 times
2: more than 5 times to 10 times
1: 5 times or less

### <Shrinkage test>

After printing, the printed matters were left alone at room temperature for 30 minutes, and the degree of the printed matter being curled was evaluated through observation.
5: curls do not appear and the printed matter is flat
4: curls slightly appear
3: curls appear, but the printed matter becomes flat when pulled using a hand
2: curls appear and the printed matter is uneven even when pulled using a hand.
1: the printed matter is significantly curled and is uneven even when pulled using a hand.

**[Table 2]**

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Component A polyfunctional acrylate compound | PO-modified neopentyl glycol diacrylate | 36.5 | 49.3 | 53.3 | 67.3 | 45.3 | 36.5 | 36.5 | 36.5 | 36.5 | 36.5 | 77.3 |
| | 3-methylpentanediol diacrylate | 50.8 | 30.0 | 30.0 | 20.0 | 20.0 | - | - | - | - | - | - |
| | 1,9-nonanediol diacrylate | - | - | - | - | - | 50.8 | - | - | - | - | - |
| | 1,10-decanediol diacrylate | - | - | - | - | - | - | 50.8 | - | - | - | - |
| | 1,12-dodecanediol diacrylate | - | - | - | - | - | - | - | 50.8 | - | - | - |
| | tripropylene glycol diacrylate | - | - | - | - | - | - | - | - | 50.8 | - | - |
| | trimethylolpropane triacrylate | - | - | - | - | - | - | - | - | - | 50.8 | - |
| | CN964 A85 (urethane acrylate oligomer) | - | | - | - | - | - | - | - | - | - | 10.0 |
| Other monomers | phenoxy ethyl acrylate | - | - | - | - | - | - | - | - | - | - | - |
| | N-vinyl caprolactam | - | - | - | - | - | - | - | - | - | - | - |
| Component B-1 polymerization initiator | IRGACURE 369 (Mw: 366) | - | - | - | - | - | - | - | - | - | - | - |
| | IRGACURE 379 (Mw: 380) | - | - | - | - | - | - | - | - | - | - | - |
| | Omnipol 910 (Mw: 1032) | - | - | - | - | - | - | - | - | - | - | - |
| | IRGACURE 819 (Mw: 418) | 1.5 | 1.5 | 1.5 | 1.5 | 1.5 | 1.5 | 1.5 | 1.5 | 1.5 | 1.5 | 1.5 |
| Component B-2 polymerization initiator | Speedcure 7010 (compound I-E) (Mw: 1899) | 2.0 | 2.0 | 2.0 | 2.0 | 2.0 | 2.0 | 2.0 | 2.0 | 2.0 | 2.0 | 2.0 |
| | Omnipol TX (compound I-A) (Mw: 820) | - | - | - | - | - | - | - | - | - | - | - |
| | Omnipol BP (compound I-F) (Mw: 960) | - | - | - | - | - | - | - | - | - | - | - |
| | Compound I-D (Mw: 2309) | - | - | - | - | - | - | - | - | - | - | - |
| | Compound I-J (Mw: 1629) | - | - | - | - | - | - | - | - | - | - | - |
| Other polymerization initiators | Speedcure 7040 (Mw: 1066) | 1.0 | 1.0 | 1.0 | 1.0 | 1.0 | 1.0 | 1.0 | 1.0 | 1.0 | 1.0 | 1.0 |
| | Speedcure ITX (Mw: 254) | - | - | - | - | - | - | - | - | - | - | - |
| | LUCIRIN TPO (Mw: 348) | - | - | - | - | - | - | - | - | - | - | - |
| | IRGACURE 184 (Mw: 204) | - | - | - | - | - | - | - | - | - | - | - |
| | IRGACURE 907 (Mw: 279) | - | - | - | - | - | - | - | - | - | - | - |
| Mill base | Cyan mill base A | 8.0 | - | - | - | - | 8.0 | 8.0 | 8.0 | 8.0 | 8.0 | 8.0 |
| | Magenta mill base B | - | 16.0 | - | - | - | - | - | - | - | - | - |
| | Yellow mill base C | - | - | 12.0 | - | - | - | - | - | - | - | - |
| | Black mill base D | - | - | - | 8.0 | - | - | - | - | - | - | - |
| | White mill base E | - | - | - | - | 30.0 | - | - | - | - | - | - |
| Polymerization inhibitor | FIRSTCURE ST- 1 | 0.1 | 0.1 | 0.1 | 0.1 | 0.1 | 0.1 | 0.1 | 0.1 | 0.1 | 0.1 | 0.1 |
| Surfactant | BYK307 | 0.1 | 0.1 | 0.1 | 0.1 | 0.1 | 0.1 | 0.1 | 0.1 | 0.1 | 0.1 | 0.1 |
| | | | | | | | | | | | | |
| Evaluation results | Migration | 4 | 4 | 4 | 4 | 4 | 4 | 3 | 3 | 4 | 4 | 4 |
| | Odor | 5 | 5 | 5 | 5 | 5 | 4 | 4 | 3 | 5 | 5 | 5 |
| | Shrinkage | 5 | 5 | 5 | 5 | 5 | 5 | 5 | 5 | 5 | 3 | 5 |
| | Blocking resistance | 5 | 5 | 5 | 5 | 5 | 4 | 4 | 3 | 5 | 5 | 5 |
| | Curability | 5 | 5 | 5 | 5 | 5 | 5 | 5 | 5 | 5 | 5 | 5 |

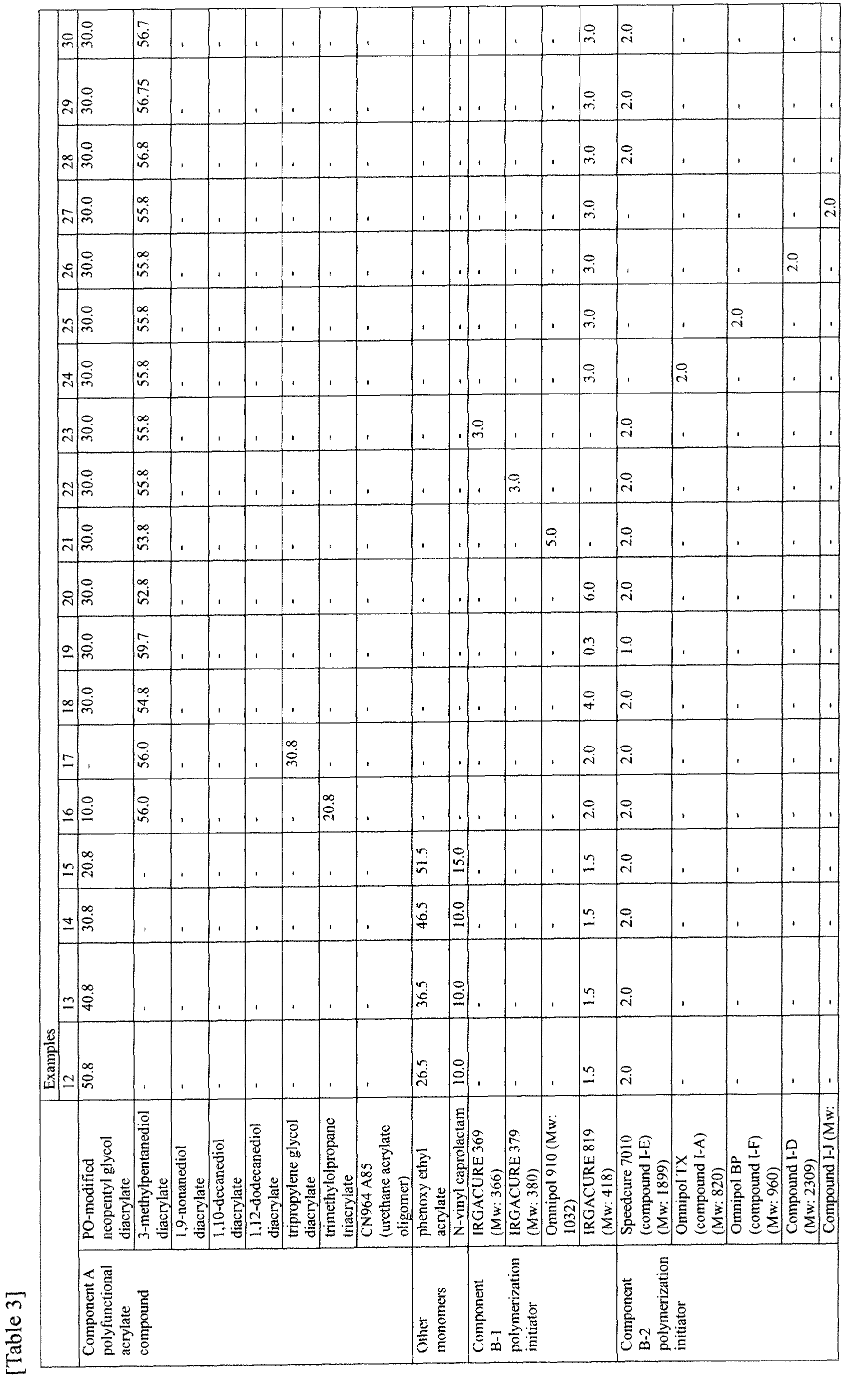

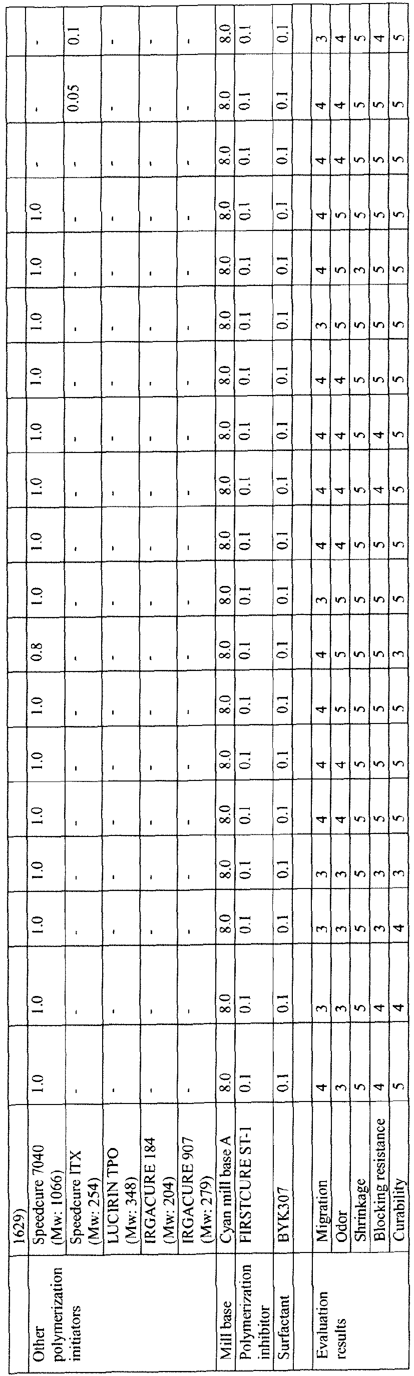

**[Table 4]**

| | | Comparative Examples | | | | | | | | |
|---|---|---|---|---|---|---|---|---|---|---|
| | | 1 | 2 | 3 | 4 | 5 | 6 | 7 | 8 | 9 |
| Component A polyfunctional acrylate compound | PO-modified neopentyl glycol diacrylate | - | 30.0 | 30.0 | 30.0 | 30.0 | 30.0 | 30.0 | 30.0 | 30.0 |
| | 3-methylpentanediol diacrylate | - | 59.3 | 47.8 | 57.8 | 53.8 | 54.8 | 54.8 | 54.8 | 55.3 |
| | 1,9-nonanediol diacrylate | - | - | - | - | - | - | - | - | - |
| | 1,10-decanediol diacrylate | - | - | - | - | - | - | - | - | - |
| | 1,12-dodecanediol diacrylate | - | - | - | - | - | - | - | - | - |
| | tripropylene glycol diacrylate | - | - | - | - | - | - | - | - | - |
| | trimethylolpropane triacrylate | - | - | - | - | - | - | - | - | - |
| | CN964 A85 (urethane acrylate oligomer) | - | - | - | - | - | - | - | - | - |
| Other monomers | phenoxy ethyl acrylate | 60.0 | - | - | - | - | - | - | - | - |
| | N-vinyl caprolactam | 27.3 | - | - | - | - | - | - | - | - |
| Component B-1 polymerization initiator | IRGACURE 369 (Mw: 366) | - | - | - | - | - | - | - | - | - |
| | IRGACURE 379 (Mw: 380) | - | - | - | - | - | - | - | - | - |
| | Omnipol 910 (Mw: 1032) | - | - | - | - | - | - | - | - | - |
| | IRGACURE 819 (Mw: 418) | 1.5 | 1.5 | - | 4.0 | 8.0 | - | - | - | 1.5 |
| Component B-2 polymerization initiator | Speedcure 7010 (compound I-E) (Mw: 1899) | 2.0 | - | - | - | - | 4.0 | 4.0 | 4.0 | 2.0 |
| | Omnipol TX (compound I-A) (Mw: 820) | - | - | - | - | - | - | - | - | - |
| | Omnipol BP (compound I-F) (Mw: 960) | - | - | - | - | - | - | - | - | - |
| | Compound I-D (Mw: 2309) | - | - | - | - | - | - | - | - | - |
| | Compound I-J (Mw: 1629) | - | - | - | - | - | - | - | - | - |
| Other polymerization initiators | Speedcure 7040 (Mw: 1066) | 1.0 | - | - | - | - | - | - | - | - |
| | Speedcure ITX (Mw: 254) | - | 1.0 | 3.0 | - | - | - | - | - | 3.0 |
| | LUCIRIN TPO (Mw: 348) | - | - | 8.0 | - | - | 3.0 | - | - | - |
| | IRGACURE 184 (Mw: 204) | - | - | 3.0 | - | - | - | 3.0 | - | - |
| | IRGACURE 907 (Mw: 279) | - | - | - | - | - | - | - | 3.0 | - |
| Mill base | Cyan mill base A | 8.0 | 8.0 | 8.0 | 8.0 | 8.0 | 8.0 | 8.0 | 8.0 | 8.0 |
| Polymerization inhibitor | FIRSTCURE ST-1 | 0.1 | 0.1 | 0.1 | 0.1 | 0.1 | 0.1 | 0.1 | 0.1 | 0.1 |
| Surfactant | BYK307 | 0.1 | 0.1 | 0.1 | 0.1 | 0.1 | 0.1 | 0.1 | 0.1 | 0.1 |
| | | | | | | | | | | |
| Evaluation results | Migration | 1 | 1 | 1 | 2 | 1 | 1 | 1 | 2 | 1 |
| | Odor | 1 | 4 | 4 | 3 | 3 | 2 | 3 | 1 | 4 |
| | Shrinkage | 5 | 4 | 5 | 5 | 5 | 5 | 5 | 5 | 5 |
| | Blocking resistance | 2 | 4 | 4 | 3 | 4 | 4 | 5 | 5 | 3 |
| | Curability | 1 | 4 | 5 | 3 | 3 | 5 | 5 | 5 | 5 |

## Claims

1. An active ray curable ink-jet ink composition, containing:
(component A) a polyfunctional (meth)acrylate compound;
(component B) a polymerization initiator containing,
(component B-1) a bis(acyl)phosphine compound having a molecular weight of 340 or more and/or an α-aminoketone compound having a molecular weight of 340 or more, and
(component B-2) a compound represented by the following formula (1) or (2);
wherein
the content of the component A is 20% by mass to 98% by mass of the entire ink composition,
a polymerization initiator having a molecular weight of less than 340 is not contained or the content of the polymerization initiator having a molecular weight of less than 340 is 1% by mass or less based on the entire ink composition, and
the total content of the (component B) polymerization initiator together with other polymerization initiators is in the range of 2.0% by mass to 10.0 % by mass of the entire ink composition, 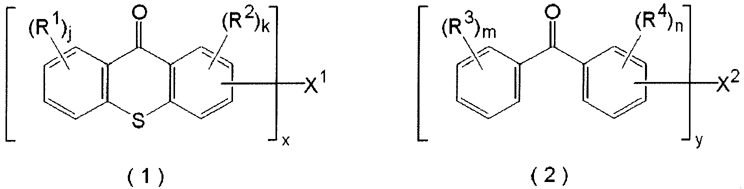 in the formulae (1) and (2), R¹, R², R³, and R⁴ each independently represent an alkyl group having 1 to 5 carbon atoms or a halogen atom, x and y each independently represent an integer of 2 to 4, j and m each independently represent an integer of 0 to 4, k and n each independently represent an integer of 0 to 3, plural R¹'s, R²'s, R³'s, and R⁴'s may be the same as or different from each other when j, k, m, and n are integers of 2 or more, X¹ represents an x-valent hydrocarbon chain having 2 to 300 carbon atoms, which may include an ether bond and/or an ester bond, and X² represents a y-valent hydrocarbon chain having 2 to 300 carbon atoms, which may include an ether bond and/or an ester bond.

2. The active ray curable ink-jet ink composition according to claim 1, wherein the compound represented by the formula (1) is a compound represented by the formula (1') and the compound represented by the formula (2) is a compound represented by the formula (2'), 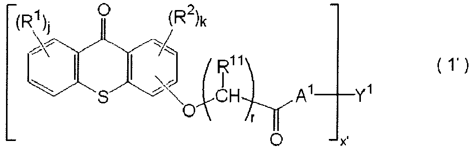 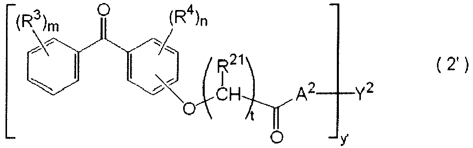 in the formula (1'), R¹, R², j, and k have the same definitions as R¹, R², j, and k in the formula (1), R¹¹ each independently represent a hydrogen atom or an alkyl group having 1 to 4 carbon atoms, r each independently represent an integer of 1 to 6, x' represents an integer of 2 to 4, Y¹ represents a residue obtained by removing hydrogen atoms of the x' number of hydroxy groups from a polyhydroxy compound having the x' number of hydroxy groups, and A¹ represents at least one group selected from a group consisting of the following (i) to (iii), in the formula (2'), R³, R⁴, m, and n have the same definitions as R³, R⁴, m, and n in the formula (2), R²¹ each independently represent a hydrogen atom or an alkyl group having 1 to 4 carbon atoms, t represents an integer of 1 to 6, y' represents an integer of 2 to 4, Y² represents a residue obtained by removing hydrogen atoms of the y' number of hydroxy groups from a polyhydroxy compound having the y' number of hydroxy groups, and A² represents at least one group selected from a group consisting of the following (i) to (iii),
* -[O(CHR¹²CHR¹³)ₐ]_{d}-** (i)
* -[O(CH₂)_{b}CO]_{d}-** (ii)
*-[O(CH₂)_{b}CO]_{(d-1)}-[O(CHR¹²CHR¹³)ₐ]-** (iii)
in the formulae (i) to (iii), one of R¹² and R¹³ represents a hydrogen atom and the other represents a hydrogen atom, a methyl group, or an ethyl group, a represents an integer of 1 or 2, b represents an integer of 4 or 5, d represents an integer of 1 to 20, * represents a bonding position with carbonyl carbon, and ** represents a bonding position with Y¹ or Y².

3. The active ray curable ink-jet ink composition according to claim 1 or 2, further containing the compound represented by the formula (1).

4. The active ray curable ink-jet ink composition according to any one of claims 1 to 3, further containing (component B-3) a compound represented by the following formula (3), 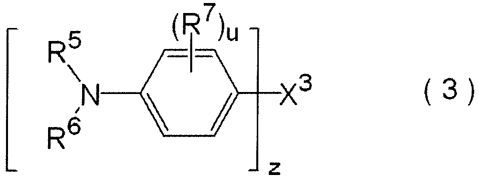 in the formula (3), R⁵, R⁶, and R⁷ each independently represent a hydrogen atom or an alkyl group having 1 to 5 carbon atoms, z represents an integer of 2 to 4, u represents 4, and X³ represents a z-valent hydrocarbon chain having 2 to 300 carbon atoms, which may include an ether bond and/or an ester bond.

5. The active ray curable ink-jet ink composition according to any one of claims 1 to 4, further containing bis(2,4,6-trimethyl benzoyl)-phenyl phosphine oxide as the bis(acyl)phosphine compound having a molecular weight of 340 or more.

6. The active ray curable ink-jet ink composition according to any one of claims 1 to 5, further containing at least one selected from a group consisting of 2-benzyl-2-dimethylamino-1-(4-morpholinophenyl)-butanone-1,2-dimethylamino-2-(4-methyl benzyl)-1-(4-morpholin-4-yl-phenyl)-butane-1-one and polyethylene glycol di{β-4-[4-(2-dimethylamino-2-benzyl)butanoyl phenyl]piperazine} as an α-aminoketone compound having a molecular weight of 340 or more.

7. The active ray curable ink-jet ink composition according to any one of claims 1 to 6, further containing 20% by mass to 90% by mass of a bifunctional (meth)acrylate monomer based on the entire ink composition as the component A.

8. The active ray curable ink-jet ink composition according to any one of claims 1 to 7, further containing a bifunctional (meth)acrylate monomer which includes a hydrocarbon chain having 5 or more carbon atoms in a molecule and/or a bifunctional (meth)acrylate monomer which includes a propylene oxide chain or a tetraethylene glycol chain in a molecule as the compound A.

9. The active ray curable ink-jet ink composition according to any one of claims 1 to 8, further containing 0.05% by mass to 5% by mass of the component B-1 based on the entire ink composition.

10. The active ray curable ink-jet ink composition according to any one of claims 1 to 9, further containing 0.1% by mass to 5% by mass of the component B-2 based on the entire ink composition.

11. The active ray curable ink-jet ink composition according to any one of claims 1 to 10, wherein the active ray curable ink-jet ink composition is for package printing.

12. An ink-jet recording method, comprising:
(process a) ejecting the active ray curable ink-jet ink composition according to any one of claims 1 to 11 from an ink-jet head to print the active ray curable ink-jet ink composition on a support for a package having a thickness of 150 µm or less; and
(process b) irradiating the ejected active ray curable ink-jet ink composition with active rays, in this order.

13. A printed matter which is produced using the ink-jet recording method according to claim 12.

## Patentansprüche

1. Durch aktive Strahlung härtbare Tintenstrahl-Tintenzusammensetzung enthaltend:
(Komponente A) Eine polyfunktionelle (Meth)acrylat-Verbindung;
(Komponente B) Einen Polymerisationsinitiator enthaltend,
(Komponente B-1) Eine Bis(acyl)phosphin-Verbindung mit einem Molekulargewicht von 340 oder mehr und/oder eine α-Aminoketon-Verbindung mit einem Molekulargewicht von 340 oder mehr, und
(Komponente B-2) Eine Verbindung, die durch die folgende Formel (1) oder (2) repräsentiert wird;
wobei
der Gehalt an der Komponente A 20 Masseprozent bis 98 Masseprozent der gesamten Tintenzusammensetzung beträgt,
ein Polymerisationsinitiator mit einem Molekulargewicht von weniger als 340 nicht enthalten ist oder der Gehalt an dem Polymerisationsinitiator mit einem Molekulargewicht von weniger als 340 1 Masseprozent oder weniger auf der Basis der gesamten Tintenzusammensetzung beträgt, und
der Gesamtgehalt des (Komponente B) Polymerisationsinitiators zusammen mit anderen Polymerisationsinitiatoren in dem Bereich von 2,0 Masseprozent bis 10,0 Masseprozent der gesamten Tintenzusammensetzung beträgt, 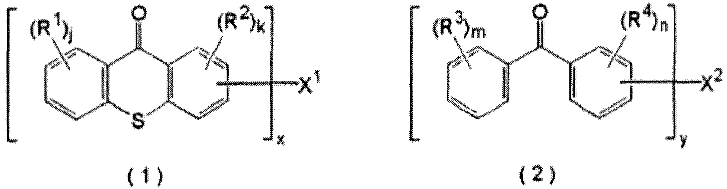 in den Formeln (1) und (2), R¹, R², R³ und R⁴ jeweils unabhängig eine Alkylgruppe mit 1 bis 5 Kohlenstoffatomen oder ein Halogenatom repräsentieren, x und y jeweils unabhängig eine ganze Zahl von 2 bis 4 repräsentieren, j und m jeweils unabhängig eine ganze Zahl von 0 bis 4 repräsentieren, k und n jeweils unabhängig eine ganze Zahl von 0 bis 3 repräsentieren, mehrere Reste R¹, R², R³ und R⁴ einander gleich oder voneinander verschieden sein können, wenn j, k, m und n ganze Zahlen von 2 oder mehr sind, X¹ eine x-valente Kohlenwasserstoffkette mit 2 bis 300 Kohlenstoffatomen, die eine Etherbindung und/oder eine Esterbindung enthalten kann, repräsentiert, und X² eine y-valente Kohlenwasserstoffkette mit 2 bis 300 Kohlenstoffatomen, die eine Etherbindung und/oder eine Esterbindung enthalten kann, repräsentiert.

2. Durch aktive Strahlung härtbare Tintenstrahl-Tintenzusammensetzung nach Anspruch 1, wobei die Verbindung, die durch die Formel (1) repräsentiert wird, eine Verbindung ist, die durch die Formel (1') repräsentiert wird, und die Verbindung, die durch die Formel (2) repräsentiert wird, eine Verbindung ist, die durch die Formel (2') repräsentiert wird, 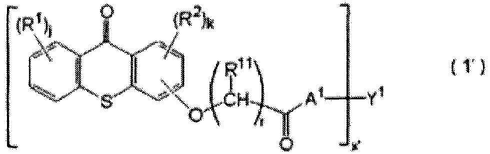 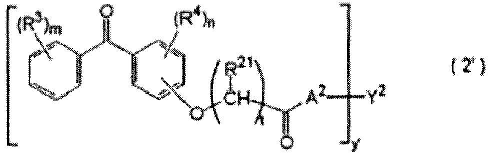 in der Formel (1'), R¹, R², j und k dieselben Definitionen haben wie R¹, R², j und k in der Formel (1), R¹¹ jeweils unabhängig ein Wasserstoffatom oder eine Alkylgruppe mit 1 bis 4 Kohlenstoffatomen repräsentiert, r jeweils unabhängig eine ganze Zahl von 1 bis 6 repräsentiert, x' eine ganze Zahl von 2 bis 4 repräsentiert, Y¹ einen Rest repräsentiert, der erhalten wurde durch Entfernen von Wasserstoffatomen von der Anzahl x' an Hydroxygruppen einer Polyhydroxy-Verbindung mit der Anzahl x' an Hydroxygruppen, und A¹ mindestens eine Gruppe repräsentiert, die ausgewählt ist aus einer Gruppe, die aus den folgenden (i) bis (iii) besteht, in der Formel (2'), R³, R⁴, m und n dieselben Definitionen haben wie R³, R⁴, m und n in der Formel (2), R²¹ jeweils unabhängig ein Wasserstoffatom oder eine Alkylgruppe mit 1 bis 4 Kohlenstoffatomen repräsentiert, t eine ganze Zahl von 1 bis 6 repräsentiert, y' eine ganze Zahl von 2 bis 4 repräsentiert, Y² einen Rest repräsentiert, der erhalten wurde durch Entfernen von Wasserstoffatomen von der Anzahl y' von Hydroxygruppen einer Polyhydroxy-Verbindung mit der Anzahl y' an Hydroxygruppen, und A² mindestens eine Gruppe repräsentiert, die ausgewählt ist aus einer Gruppe, die aus den folgenden (i) bis (iii) besteht,
*-[O(CHR¹²CHR¹³)ₐ]_{d}-** (i)
*-[O(CH₂)_{b}CO]_{d}-** (ii)
*-[O(CH₂)_{b}CO]_{(d-1)}-[O(CHR¹²CHR¹³)ₐ]-** (iii)
in den Formeln (i) bis (iii), einer der Reste R¹² und R¹³ ein Wasserstoffatom repräsentiert und der andere ein Wasserstoffatom, eine Methylgruppe oder eine Ethylgruppe repräsentiert, a eine ganze Zahl von 1 oder 2 repräsentiert, b eine ganze Zahl von 4 oder 5 repräsentiert, d eine ganze Zahl von 1 bis 20 repräsentiert, *eine Bindungsstelle mit einem Carbonyl-Kohlenstoff repräsentiert, und ** eine Bindungsstelle mit Y¹ oder Y² repräsentiert.

3. Durch aktive Strahlung härtbare Tintenstrahl-Tintenzusammensetzung nach Anspruch 1 oder 2, außerdem die Verbindung, die durch die Formel (1) repräsentiert wird, enthaltend.

4. Durch aktive Strahlung härtbare Tintenstrahl-Tintenzusammensetzung nach einem der Ansprüche 1 bis 3, außerdem (Komponente B-3) eine Verbindung, die durch die folgende Formel (3) repräsentiert wird, enthaltend, 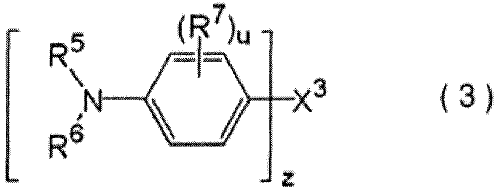 wobei in der Formel (3), R⁵, R⁶ und R⁷ jeweils unabhängig ein Wasserstoffatom oder eine Alkylgruppe mit 1 bis 5 Kohlenstoffatomen repräsentieren, z eine ganze Zahl von 2 bis 4 repräsentiert, u 4 repräsentiert, und X³ eine z-valente Kohlenwasserstoffkette mit 2 bis 300 Kohlenstoffatomen, die eine Etherbindung und/oder eine Esterbindung enthalten kann, repräsentiert.

5. Durch aktive Strahlung härtbare Tintenstrahl-Tintenzusammensetzung nach einem der Ansprüche 1 bis 4, außerdem Bis(2,4,6-trimethyl-benzoyl)-phenylphosphinoxid als die Bis(acyl)phosphin-Verbindung mit einem Molekulargewicht von 340 oder mehr enthaltend.

6. Durch aktive Strahlung härtbare Tintenstrahl-Tintenzusammensetzung nach einem der Ansprüche 1 bis 5, außerdem als eine α-Aminoketon-Verbindung mit einem Molekulargewicht von 340 oder mehr mindestens eine Verbindung enthaltend, die ausgewählt ist aus einer Gruppe, die aus 2-Benzyl-2-dimethylamino-1-(4-morpholinophenyl)-butanon-1,2-dimethylamino-2-(4-methyl-benzyl)-1-(4-morpholin-4-yl-phenyl)-butan-1-on und Polyethylenglycol-di{β-4-[4-(2-dimethylamino-2-benzyl)butanoyl-phenyl]piperazin} besteht.

7. Durch aktive Strahlung härtbare Tintenstrahl-Tintenzusammensetzung nach einem der Ansprüche 1 bis 6, außerdem 20 Masseprozent bis 90 Masseprozent eines bifunktionellen (Meth)acrylat-Monomers, auf der Basis der gesamten Tintenzusammensetzung, als die Komponente A enthaltend.

8. Durch aktive Strahlung härtbare Tintenstrahl-Tintenzusammensetzung nach einem der Ansprüche 1 bis 7, außerdem als die Verbindung A ein bifunktionelles (Meth)acrylat-Monomer, das eine Kohlenwasserstoffkette mit 5 oder mehr Kohlenstoffatomen in einem Molekül enthält, und/oder ein bifunktionelles (Meth)acrylat-Monomer, das eine Propylenoxid-Kette oder eine Tetraethylenglycol-Kette in einem Molekül enthält, enthaltend.

9. Durch aktive Strahlung härtbare Tintenstrahl-Tintenzusammensetzung nach einem der Ansprüche 1 bis 8, außerdem 0,05 Masseprozent bis 5 Masseprozent der Komponente B-1, auf der Basis der gesamten Tintenzusammensetzung, enthaltend.

10. Durch aktive Strahlung härtbare Tintenstrahl-Tintenzusammensetzung nach einem der Ansprüche 1 bis 9, außerdem 0,1 Masseprozent bis 5 Masseprozent der Komponente B-2, auf der Basis der gesamten Tintenzusammensetzung, enthaltend.

11. Durch aktive Strahlung härtbare Tintenstrahl-Tintenzusammensetzung nach einem der Ansprüche 1 bis 10, wobei die durch aktive Strahlung härtbare Tintenstrahl-Tintenzusammensetzung für Verpackungsdruck ist.

12. Tintenstrahl-Aufzeichnungsverfahren aufweisend:
(Prozess a) Ausstoßen der durch aktive Strahlung härtbaren Tintenstrahl-Tintenzusammensetzung nach einem der Ansprüche 1 bis 11 aus einem Tintenstrahlkopf, um die durch aktive Strahlung härtbare Tintenstrahl-Tintenzusammensetzung auf einen Träger für eine Verpackung mit einer Dicke von 150 µm oder weniger zu drucken; und
(Prozess b) Bestrahlen der ausgestoßenen durch aktive Strahlung härtbaren Tintestrahl-Tintenzusammensetzung mit aktiver Strahlung, in dieser Reihenfolge.

13. Druckerzeugnis, das unter Verwendung des Tintenstrahl-Aufzeichnungsverfahrens nach Anspruch 12 hergestellt ist.

## Revendications

1. Composition d'encre à jet d'encre durcissable sous rayonnement actif, contenant :
(composant A) un composé de (méth)acrylate polyfonctionnel ;
(composant B) un initiateur de polymérisation contenant :
(composant B-1) un composé de bis(acyl)phosphine présentant un poids moléculaire supérieur ou égal à 340 et/ou un composé d'a-aminocétone présentant un poids moléculaire supérieur ou égal à 340, et
(composant B-2) un composé représenté par la formule suivante (1) ou (2) ;
dans lequel
la teneur du composant A s'étend de 20 % en masse à 98 % en masse de la composition d'encre entière,
un initiateur de polymérisation présentant un poids moléculaire inférieur à 340 n'est pas contenu, ou la teneur de l'initiateur de polymérisation présentant un poids moléculaire inférieur à 340 est inférieure ou égale à 1 % en masse sur la base de la composition d'encre entière, et
la teneur totale de (composant B) initiateur de polymérisation conjointement aux autres initiateurs de polymérisation est comprise dans la plage allant de 2,0 % en masse à 10,0 % en masse de la composition d'encre entière, 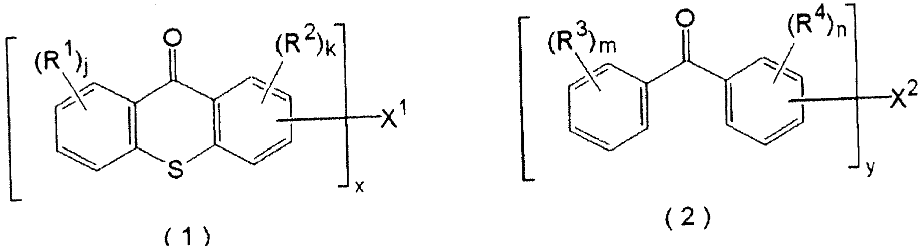 dans les formules (1) et (2), R¹, R², R³ et R⁴ représentent chacun indépendamment un groupe alkyle présentant de 1 à 5 atomes de carbone ou un atome halogène ; x et y représentent chacun indépendamment un entier allant de 2 à 4 ; j et m représentent chacun indépendamment un entier allant de 0 à 4 ; k et n représentent chacun indépendamment un entier allant de 0 à 3 ; plusieurs R¹, R², R³ et R⁴ peuvent être identiques ou différents entre eux lorsque j, k, m et n sont des entiers supérieurs ou égaux à 2 ; X¹ représente une chaîne hydrocarbonée de valence x présentant de 2 à 300 atomes de carbone, lesquels peuvent inclure une liaison éther et/ou une liaison ester, et X² représente une chaîne hydrocarbonée de valence y présentant de 2 à 300 atomes de carbone, lesquels peuvent inclure une liaison éther et/ou une liaison ester.

2. Composition d'encre à jet d'encre durcissable sous rayonnement actif selon la revendication 1, dans laquelle le composé représenté par la formule (1) est un composé représenté par la formule (1') et le composé représenté par la formule (2) est un composé représenté par la formule (2'), 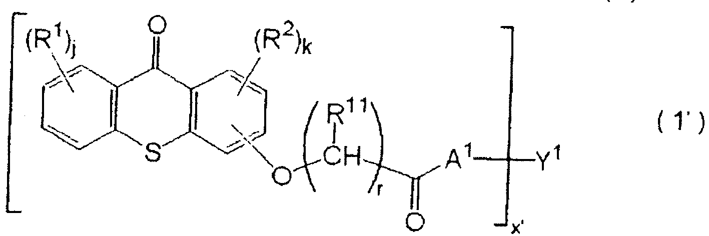 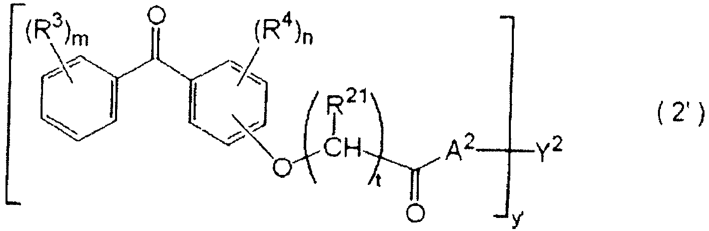 dans la formule (1'), R¹, R², j et k représentent les même définitions que R¹, R², j et k dans la formule (1), R¹¹ représente à chaque fois indépendamment un atome hydrogène ou un groupe alkyle présentant de 1 à 4 atomes de carbone ; r représente à chaque fois indépendamment un entier allant de 1 à 6 ; x' représente un entier allant de 2 à 4 ; Y¹ représente un résidu obtenu en éliminant des atomes d'hydrogène du nombre x' de groupes hydroxy à partir du groupe polyhydroxy présentant le nombre x' de groupes hydroxy, et A¹ représente au moins un groupe sélectionné parmi un groupe consistant en les éléments (i) à (iii) suivants, dans la formule (2') ; R³, R⁴, m et n présentent les mêmes définitions que R³, R⁴, m et n dans la définition (2) ; R²¹ représente à chaque fois indépendamment un atome hydrogène ou un groupe alkyle présentant de 1 à 4 atomes de carbone ; t représente un entier allant de 1 à 6 ; y' représente un entier allant de 2 à 4 ; Y² représente un résidu obtenu en éliminant des atomes d'hydrogène du nombre y' de groupes hydroxy à partir d'un groupe polyhydroxy présentant le nombre y' de groupes hydroxy, et A² représente au moins un groupe sélectionné parmi un groupe consistant en les éléments (i) à (iii) suivants,
*-[O(CHR¹²CHR¹³)ₐ]_{d}-** (i)
*-[O(CH₂)_{b}CO]_{d}-** (ii)
*-[O(CH₂)_{b}CO]_{(d-1)}-[O(CHR¹²CHR¹³)_{a]}-** (iii)
dans les formules (i) à (iii), un élément parmi R¹² et R¹³ représente un atome hydrogène et l'autre représente un atome hydrogène, un groupe méthyle, ou un groupe éthyle ; a représente un entier égal à 1 ou 2 ; b représente un entier égal à 4 ou 5 ; d représente un entier allant de 1 à 20 ; * représente une position de liaison avec un carbone carbonyle, et ** représente une position de liaison avec Y¹ ou Y².

3. Composition d'encre à jet d'encre durcissable sous rayonnement actif selon la revendication 1 ou 2, contenant en outre le composé représenté par la formule (1).

4. Composition d'encre à jet d'encre durcissable sous rayonnement actif selon l'une quelconque des revendications 1 à 3, contenant en outre (composant B-3) un composé représenté par la formule (3) suivante, 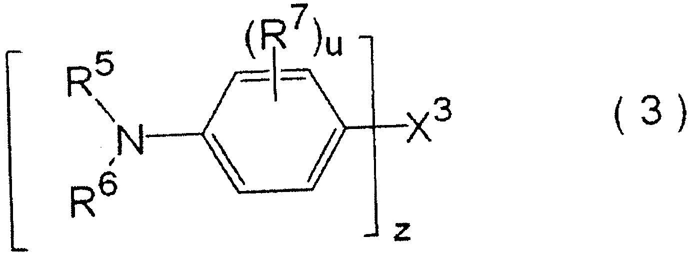 dans la formule (3), R⁵, R⁶ et R⁷ représentent chacun indépendamment un atome hydrogène ou un groupe alkyle présentant de 1 à 5 atomes de carbone ; z représente un entier allant de 2 à 4 ; u représente 4, et X³ représente une chaîne hydrocarbonée de valence z présentant de 2 à 300 atomes de carbone, lesquels peuvent inclure une liaison éther et/ou une liaison ester.

5. Composition d'encre à jet d'encre durcissable sous rayonnement actif selon l'une quelconque des revendications 1 à 4, contenant en outre un oxyde de bis(2,4,6-triméthylbenzoyl)-phényle comme composé de bis(acyl)phosphine présentant un poids moléculaire supérieur ou égal à 340.

6. Composition d'encre à jet d'encre durcissable sous rayonnement actif selon l'une quelconque des revendications 1 à 5, contenant au moins un élément sélectionné parmi un groupe consistant en 2-benzyl-2-diméthylamino-1-(4-morpholinophényl)-butanone-1,2-diméthylamino-2-(4-méthylbenzyl)-1 -(4-morpholino-4-yl-phényl)-butane-1-one, et polyéthylène glycol di{β-4-[4-(2-diméthylamino-2-benzyl)butanoyl-phényl]pipérazine} comme composé α-aminocétone présentant un poids moléculaire supérieur ou égal à 340.

7. Composition d'encre à jet d'encre durcissable sous rayonnement actif selon l'une quelconque des revendications 1 à 6, contenant en outre de 20 % en masse à 90 % en masse d'un monomère de (méth)acrylate bifonctionnel sur la base de la composition d'encre entière comme composant A.

8. Composition d'encre à jet d'encre durcissable sous rayonnement actif selon l'une quelconque des revendications 1 à 7, contenant en outre un monomère de (méth)acrylate bifonctionnel, lequel inclut une chaine hydrocarbonée présentant 5 atomes de carbone ou plus dans une molécule, et/ou un monomère de (méth)acrylate bifonctionnel, lequel inclut une chaîne d'oxyde de propylène ou une chaîne de tétraéthylène glycol dans une molécule comme composant A.

9. Composition d'encre à jet d'encre durcissable sous rayonnement actif selon l'une quelconque des revendications 1 à 8, contenant en outre de 0,05 % en masse à 5 % en masse du composant B-1 sur la base de la composition d'encre entière.

10. Composition d'encre à jet d'encre durcissable sous rayonnement actif selon l'une quelconque des revendications 1 à 9, contenant en outre de 0,1 % en masse à 5 % en masse du composant B-2 sur la base de la composition d'encre entière.

11. Composition d'encre à jet d'encre durcissable sous rayonnement actif selon l'une quelconque des revendications 1 à 10, dans laquelle la composition d'encre à jet d'encre durcissable sous rayonnement actif est destinée à l'impression d'emballages.

12. Procédé d'enregistrement par jet d'encre comprenant les étapes consistant à :
(processus a) éjecter la composition d'encre à jet d'encre durcissable sous rayonnement actif selon l'une quelconque des revendications 1 à 11 à partir d'une tête à jet d'encre afin d'imprimer la composition d'encre à jet d'encre durcissable sous rayonnement actif sur un support pour un emballage présentant une épaisseur inférieure ou égale à 150 µm, et
(processus b) irradier la composition d'encre à jet d'encre durcissable sous rayonnement actif éjectée avec des rayonnements actifs, dans cet ordre.

13. Matière imprimée produit à l'aide d'un procédé d'enregistrement par jet d'encre selon la revendication 12.
